# EUROPEAN PATENT APPLICATION

(11) **EP 4 521 621 A1**
(43) Date of publication of application: **12.03.2025**
(21) Application number: 23810967.2
(22) Date of filing: 19.05.2023
(51) Int. Cl.: H02M 3/335, H02M 1/00

(54) **CONTROL CIRCUIT OF POWER MODULE, POWER MODULE AND ELECTRONIC DEVICE**

(30) Priority: 27.05.2022 CN 202210590873
(71) Applicant: Huawei Digital Power Technologies Co., Ltd., Shenzhen, Guangdong 518043 (CN)
(72) Inventor: SUN, Chenghao, Shenzhen, Guangdong 518043 (CN); WU, Liang, Shenzhen, Guangdong 518043 (CN); DAI, Baolei, Shenzhen, Guangdong 518043 (CN); GUO, Zhiqiang, Shenzhen, Guangdong 518043 (CN)
(74) Representative: Gill Jennings & Every LLP
(86) International application number: PCT/CN2023/095302
(87) International publication number: WO 2023/226896

(57) **Abstract**

This application provides a control circuit of a power supply module, a power supply module, and an electronic device. The power supply module includes an active clamp flyback converter circuit and a rectifier circuit. The active clamp flyback converter circuit includes a main power transistor, an auxiliary power transistor, and a transformer. The control circuit is configured to: control the active clamp flyback converter circuit to operate in a discontinuous conduction mode, and control the rectifier circuit to discharge to the transformer within preset duration after the auxiliary power transistor is turned off and before the main power transistor is turned on; and after the rectifier circuit stops discharging to the transformer, control the main power transistor to be turned on based on a comparison result of a voltage difference between a drain and a source of the main power transistor and a preset voltage value. Implementing embodiments of this application can reduce a switching loss of the main power transistor.

## Description

This application claims priority to Chinese Patent Application No. 202210590873.7, filed with the China National Intellectual Property Administration on May 27, 2022 and entitled "CONTROL CIRCUIT OF POWER SUPPLY MODULE, POWER SUPPLY MODULE, AND ELECTRONIC DEVICE", which is incorporated herein by reference in its entirety.

### TECHNICAL FIELD

This application relates to the field of power supply technologies, and in particular, to a control circuit of a power supply module, a power supply module, and an electronic device.

### BACKGROUND

A power supply module of an electronic device usually includes a direct-current converter circuit. The direct-current converter circuit usually uses an asymmetric half-bridge flyback converter (Asymmetrical Half-Bridge Flyback Converter, AHB) circuit or an active clamp flyback converter (Active Clamp Flyback Converter, ACF) circuit. The direct-current converter circuit usually includes a main power transistor and an auxiliary power transistor. In a discontinuous conduction mode (discontinuous conduction mode, DCM), the main power transistor and the auxiliary power transistor are alternately turned on and off. When the power transistor is turned on or turned off, a smaller voltage difference between two terminals of the power transistor indicates a smaller switching loss of the power transistor. A greater voltage difference between the two terminals of the power transistor indicates a greater switching loss of the power transistor. Therefore, reducing the switching loss of the power transistor is an urgent problem to be resolved.

### SUMMARY

Embodiments of this application provide a control circuit of a power supply module, a power supply module, and an electronic device, to reduce a switching loss of a main power transistor in an active clamp flyback converter circuit.

The following describes this application from different aspects. It should be understood that mutual reference may be made to the following implementations and beneficial effects of the different aspects.

According to a first aspect, this application provides a control circuit of a power supply module. The power supply module is configured to: receive an input voltage and supply power to a load. The power supply module includes an active clamp flyback converter circuit, an auxiliary winding, and a rectifier circuit. The active clamp flyback converter circuit includes a main power transistor, an auxiliary power transistor, and a transformer. The active clamp flyback converter circuit operates in a discontinuous conduction mode. The auxiliary winding supplies power to the control circuit through the rectifier circuit. The control circuit is configured to:
after the auxiliary power transistor is turned off and before the main power transistor is turned on, control the rectifier circuit to discharge to the transformer for preset duration; and
after the rectifier circuit stops discharging to the transformer, control the main power transistor to be turned on based on a comparison result of a voltage difference between a drain and a source of the main power transistor and a preset voltage value.

The control circuit provided in embodiments of this application controls the rectifier circuit to discharge to the transformer through the auxiliary winding, so that the voltage difference between the drain and the source of the main power transistor can be reduced. In addition, when the voltage difference between the drain and the source of the main power transistor is reduced to the preset voltage value, the main power transistor is controlled to be turned on, to reduce a switching loss of the main power transistor, and further increase a power conversion rate of the power supply module.

With reference to the first aspect, in a possible implementation, after the switching transistor is turned off, and when the voltage difference between the drain and the source of the main power transistor is less than or equal to the preset voltage value, the control circuit controls the main power transistor to be turned on. For example, the preset voltage value may be a small value, for example, 0 V, 5 V, 6 V, 10 V, or 20 V.

The control circuit provided in embodiments of this application controls, when the voltage difference between the drain and the source of the main power transistor is less than or equal to the preset voltage value, the main power transistor to be turned on, to reduce a switching loss of the main power transistor.

With reference to the first aspect, in a possible implementation, the control circuit controls, based on a comparison result of the voltage difference between the drain and the source of the main power transistor and a sum of the input voltage and a primary-side winding coupling voltage, the rectifier circuit to start discharging to the transformer.

Optionally, when the voltage difference between the drain and the source of the main power transistor is less than or equal to the sum of the input voltage and the primary-side winding coupling voltage, the control circuit controls the rectifier circuit to start discharging to the transformer.

The primary-side winding coupling voltage is a coupling voltage generated at two terminals of a primary-side winding by the auxiliary winding coupled to the transformer. The coupling voltage is equal to a product of a winding turn ratio N and a voltage Vo at two terminals of the auxiliary winding, namely, NVo.

Optionally, duration of turning off a main power transistor Q1 may be obtained based on a voltage difference between a drain and a source of the main power transistor after the main power transistor is turned off. For example, the duration is greater than or equal to duration in which the voltage difference between the drain and the source of the main power transistor reaches a threshold after the main power transistor is turned off. The threshold may be greater than a reference voltage (namely, a voltage of a reference ground), and less than or equal to a sum of an input voltage Vin and the primary-side winding coupling voltage NVo. For example, the threshold is a value that is less than and closest to Vin+NVo.

According to a second aspect, this application provides a control circuit of a power supply module. The power supply module is configured to: receive an input voltage and supply power to a load, and includes an active clamp flyback converter circuit and a rectifier circuit. The active clamp flyback converter circuit includes a main power transistor, an auxiliary power transistor, and a transformer. The transformer includes a primary-side winding and a secondary-side winding. The active clamp flyback converter circuit operates in a discontinuous conduction mode. The secondary-side winding supplies power to the load through the rectifier circuit. The control circuit is configured to:
after the auxiliary power transistor is turned off and before the main power transistor is turned on, control the rectifier circuit to discharge to the transformer through the secondary-side winding for preset duration; and
after the rectifier circuit stops discharging to the transformer, control the main power transistor to be turned on based on a comparison result of a voltage difference between a drain and a source of the main power transistor and a preset voltage value.

The control circuit provided in embodiments of this application controls the rectifier circuit to discharge to the transformer through the secondary-side winding, so that the voltage difference between the drain and the source of the main power transistor can be reduced. In addition, when the voltage difference between the drain and the source of the main power transistor is reduced to the preset voltage value, the main power transistor is controlled to be turned on, to reduce a switching loss of the main power transistor.

With reference to the second aspect, in a possible implementation, after the switching transistor is turned off and when the voltage difference between the drain and the source of the main power transistor is less than or equal to the preset voltage value, the control circuit controls the main power transistor to be turned on. For example, the preset voltage value may be a small value, for example, 0 V, 5 V, 6 V, 10 V, or 20 V.

The control circuit provided in embodiments of this application controls, when the voltage difference between the drain and the source of the main power transistor is less than or equal to the preset voltage value, the main power transistor to be turned on, to reduce a switching loss of the main power transistor.

With reference to the second aspect, in a possible implementation, the control circuit controls, based on a comparison result of the voltage difference between the drain and the source of the main power transistor and a sum of the input voltage and a primary-side winding coupling voltage, the rectifier circuit to start discharging to the transformer.

Optionally, when the voltage difference between the drain and the source of the main power transistor is less than or equal to the sum of the input voltage and the primary-side winding coupling voltage, the control circuit controls the rectifier circuit to start discharging to the transformer.

The primary-side winding coupling voltage is a coupling voltage generated at two terminals of a primary-side winding by the auxiliary winding coupled to the transformer. The primary-side winding coupling voltage is equal to a product of a winding turn ratio N and a voltage Vo at two terminals of the auxiliary winding, namely, NVo.

Optionally, duration of turning off a main power transistor Q1 may be obtained based on a voltage difference between a drain and a source of the main power transistor after the main power transistor is turned off. For example, the duration is greater than or equal to duration in which the voltage difference between the drain and the source of the main power transistor reaches a threshold after the main power transistor is turned off. The threshold may be greater than a reference voltage (namely, a voltage of a reference ground), and less than or equal to a sum of an input voltage Vin and the primary-side winding coupling voltage NVo. For example, the threshold is a value that is less than and closest to Vin+NVo.

According to a third aspect, this application provides a power supply module, including a control circuit, an active clamp flyback converter circuit, and a rectifier circuit. The active clamp flyback converter circuit is configured to receive an input voltage. The active clamp flyback converter circuit includes a main power transistor, an auxiliary power transistor, and a transformer. The rectifier circuit is configured to receive power supplied by the transformer. The control circuit is configured to:
after the auxiliary power transistor is turned off and before the main power transistor is turned on, control the rectifier circuit to discharge to the transformer for preset duration; and
after the rectifier circuit stops discharging to the transformer, control the main power transistor to be turned on based on a comparison result of a voltage difference between a drain and a source of the main power transistor and a preset voltage value.

The power supply module provided in embodiments of this application controls the rectifier circuit to discharge to the transformer, so that the voltage difference between the drain and the source of the main power transistor can be reduced. In addition, when the voltage difference between the drain and the source of the main power transistor is reduced to the preset voltage value, the main power transistor is controlled to be turned on, to reduce a switching loss of the main power transistor, and further increase a power conversion rate of the power supply module.

With reference to the third aspect, in a possible implementation, when the voltage difference between the drain and the source of the main power transistor is less than or equal to the preset voltage value, an active clamp flyback converter circuit control unit controls the main power transistor to be turned on. For example, the preset voltage value may be a small value, for example, 0 V, 5 V, 6 V, 10 V, or 20 V.

The power supply module provided in embodiments of this application controls, when the voltage difference between the drain and the source of the main power transistor is less than or equal to the preset voltage value, the main power transistor to be turned on, to reduce a switching loss of the main power transistor.

With reference to the third aspect, in a possible implementation, the control circuit is configured to control, based on a comparison result of the voltage difference between the drain and the source of the main power transistor and a sum of the input voltage and a primary-side winding coupling voltage, the rectifier circuit to start discharging to the transformer.

Optionally, when the voltage difference between the drain and the source of the main power transistor is less than or equal to the sum of the input voltage and the primary-side winding coupling voltage, the control circuit controls the rectifier circuit to start discharging to the transformer.

The primary-side winding coupling voltage is a coupling voltage generated at two terminals of a primary-side winding by the auxiliary winding coupled to the transformer. The primary-side winding coupling voltage is equal to a product of a winding turn ratio N and a voltage Vo at two terminals of the auxiliary winding, namely, NVo.

Optionally, duration of turning off a main power transistor Q1 may be obtained based on a voltage difference between a drain and a source of the main power transistor after the main power transistor is turned off. For example, the duration is greater than or equal to duration in which the voltage difference between the drain and the source of the main power transistor reaches a threshold after the main power transistor is turned off. The threshold may be greater than a reference voltage (namely, a voltage of a reference ground), and less than or equal to a sum of the input voltage and the primary-side winding coupling voltage. For example, the threshold is a value that is less than and closest to Vin+NVo.

With reference to the third aspect, in a possible implementation, the rectifier circuit includes a switching transistor and a capacitor.

With reference to the third aspect, in a possible implementation, when the control circuit controls the switching transistor to be turned on, the rectifier circuit discharges to the transformer; and when the control circuit controls the switching transistor to be turned off, the rectifier circuit stops discharging to the transformer.

With reference to the third aspect, in a possible implementation, the power supply module further includes an auxiliary winding. The auxiliary winding is coupled to the transformer, and the auxiliary winding supplies power to the control circuit through the rectifier circuit. A drain of the switching transistor is connected to one terminal of the auxiliary winding, a source of the switching transistor is connected to one terminal of the capacitor, and the other terminal of the auxiliary winding is connected to the other terminal of the capacitor. When the control circuit controls the switching transistor to be turned on, the rectifier circuit discharges to the transformer through the auxiliary winding.

With reference to the third aspect, in a possible implementation, the transformer includes a primary-side winding and a secondary-side winding. The rectifier circuit is connected to the secondary-side winding, and the secondary-side winding supplies power to a load through the rectifier circuit. A drain of the switching transistor is connected to one terminal of the secondary-side winding, a source of the switching transistor is connected to one terminal of the capacitor, and the other terminal of the secondary-side winding is connected to the other terminal of the capacitor. When the control circuit controls the switching transistor to be turned on, the rectifier circuit discharges to the transformer through the secondary-side winding.

With reference to the third aspect, in a possible implementation, the active clamp flyback converter circuit further includes a clamp capacitor. The main power transistor, the auxiliary power transistor, and the clamp capacitor are connected in series between an input power supply and the reference ground. The input power supply is configured to provide the input voltage for the active clamp flyback converter circuit. One terminal of the auxiliary power transistor is connected to the input power supply after being connected in series to the clamp capacitor, and the other terminal of the auxiliary power transistor is connected to the drain of the main power transistor. The source of the main power transistor is connected to the reference ground.

With reference to the third aspect, in a possible implementation, the active clamp flyback converter circuit further includes a clamp capacitor. One terminal of the primary-side winding is connected to an input power supply, the other terminal of the primary-side winding is connected to the drain of the main power transistor, the source of the main power transistor is connected to the reference ground, and the input power supply is configured to provide the input voltage for the active clamp flyback converter circuit. The auxiliary power transistor and the clamp capacitor are connected in series and then connected in parallel to two terminals of the main power transistor.

According to a fourth aspect, this application provides an electronic device, including the control circuit according to any one of the first aspect, the second aspect, or the possible implementations of any aspect, or the power supply module according to any one of the third aspect or the possible implementations of any aspect.

Implementing embodiments of this application is able to reduce a switching loss of the main power transistor. This improves power conversion efficiency of the power supply module.

### BRIEF DESCRIPTION OF DRAWINGS

To describe the technical solutions in embodiments of this application more clearly, the following briefly describes the accompanying drawings used for describing embodiments.
FIG. 1A is a diagram of an electronic device according to an embodiment of this application;
FIG. 1B is another diagram of an electronic device according to an embodiment of this application;
FIG. 2A is another diagram of an electronic device according to an embodiment of this application;
FIG. 2B is another diagram of an electronic device according to an embodiment of this application;
FIG. 3 is a diagram of a power supply module according to an embodiment of this application;
FIG. 4 is another diagram of a power supply module according to an embodiment of this application;
FIG. 5 is a schematic of a control circuit of a power supply module according to an embodiment of this application;
FIG. 6 is another schematic of a control circuit of a power supply module according to an embodiment of this application;
FIG. 7 is a schematic of a circuit of a power supply module according to an embodiment of this application;
FIG. 8 is another schematic of a circuit of a power supply module according to an embodiment of this application;
FIG. 9 is a schematic of a circuit of a power supply module according to an embodiment of this application;
FIG. 10 is another schematic of a circuit of a power supply module according to an embodiment of this application;
FIG. 11 is a diagram of a running process of a power supply module according to an embodiment of this application;
FIG. 12 is a diagram of a current direction of a primary-side winding of a transformer in a power supply module according to an embodiment of this application;
FIG. 13 is a diagram of a power supply module according to an embodiment of this application;
FIG. 14 is another diagram of a power supply module according to an embodiment of this application;
FIG. 15 is another diagram of a power supply module according to an embodiment of this application;
FIG. 16 is a diagram of a running process of a power supply module according to an embodiment of this application;
FIG. 17 is a diagram of a power supply module according to an embodiment of this application;
FIG. 18 is another diagram of a power supply module according to an embodiment of this application;
FIG. 19 is another schematic of a circuit of a power supply module according to an embodiment of this application;
FIG. 20 is another schematic of a circuit of a power supply module according to an embodiment of this application;
FIG. 21 is another schematic of a circuit of a power supply module according to an embodiment of this application;
FIG. 22 is another schematic of a circuit of a power supply module according to an embodiment of this application;
FIG. 23 is another schematic of a circuit of a power supply module according to an embodiment of this application;
FIG. 24 is another schematic of a circuit of a power supply module according to an embodiment of this application;
FIG. 25 is another diagram of a power supply module according to an embodiment of this application; and
FIG. 26 is a diagram of a running process of a power supply module according to an embodiment of this application.

### DESCRIPTION OF EMBODIMENTS

The following clearly and completely describes the technical solutions in embodiments of this application with reference to the accompanying drawings in embodiments of this application.

It may be understood that a connection relationship described in this application is a direct or indirect connection. For example, that A is connected to B may not only be that A is directly connected to B, but also be that A is indirectly connected to B through one or more other electrical components. For example, it may be that A is directly connected to C, and C is directly connected to B. In this way, A is connected to B through C. It may be further understood that "A is connected to B" described in this application may be that A is directly connected to B, or may be that A is indirectly connected to B through one or more other electrical components.

In descriptions of this application, unless otherwise specified, "/" means "or". For example, A/B may indicate A or B. "And/or" in this specification describes only an association relationship between associated objects and indicates that there may be three relationships. For example, A and/or B may represent the following three cases: Only A exists, both A and B exist, and only B exists.

In descriptions of this application, terms such as "first" and "second" are only intended to distinguish between different objects but do not limit a quantity and an execution sequence, and the terms such as "first" and "second" do not indicate a definite difference. In addition, terms "include", "have", or any other variant thereof are intended to cover a non-exclusive inclusion.

The following further describes the technical solutions of this application in detail with reference to the accompanying drawings.

In embodiments of this application, an electronic device 1 may be a power-consuming device, for example, a mobile phone, a notebook computer, a computer chassis, an electric vehicle, a smart speaker, a smartwatch, or a wearable device. A power supply module provided in embodiments of this application may be used in the electronic device 1.

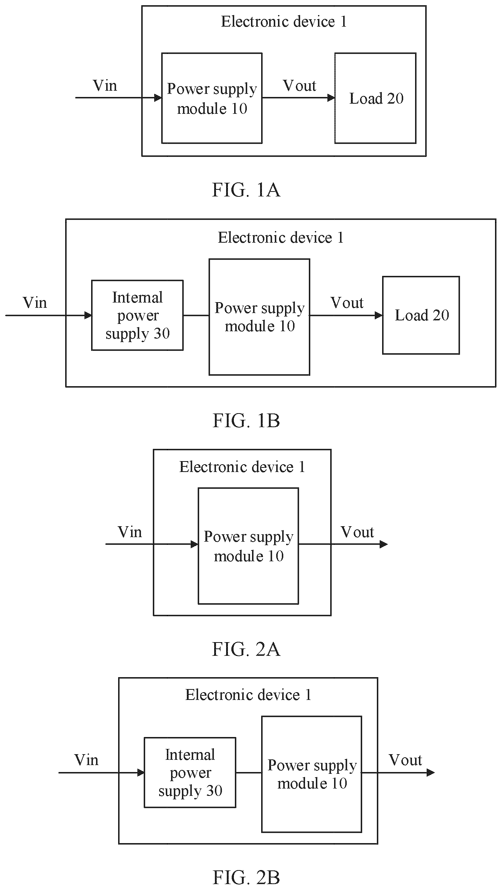

FIG. 1A is a diagram of an electronic device according to an embodiment of this application. As shown in FIG. 1A, the electronic device 1 includes a power supply module 10 and a load 20. The power supply module 10 is configured to: receive an input voltage Vin, and provide an output voltage Vout to supply power to the load 20.

FIG. 1B is another diagram of the electronic device according to an embodiment of this application. As shown in FIG. 1B, the electronic device 1 further includes the power supply module 10, the load 20, and an internal power supply 30. The internal power supply 30 is configured to: receive the input voltage Vin, and supply power to the power supply module 10. The power supply module 10 is configured to: receive the power supplied by the internal power supply 30, and provide the output voltage Vout to supply power to the load 20.

In this embodiment of this application, the electronic device 1 may alternatively be a power supply device like a power adapter, a charger, or a mobile power supply. The power supply module provided in this embodiment of this application may be used in the electronic device 1.

FIG. 2A is another diagram of the electronic device according to an embodiment of this application. As shown in FIG. 2A, the electronic device 1 includes the power supply module 10. The power supply module 10 is configured to: receive the input voltage Vin, and provide the output voltage Vout to supply power to the load 20.

FIG. 2B is another diagram of the electronic device according to an embodiment of this application. As shown in FIG. 2B, the electronic device 1 includes the power supply module 10, and the internal power supply 30. The internal power supply 30 is configured to: receive the input voltage Vin, and supply power to the power supply module 10. The power supply module 10 is configured to: receive the power supplied by the internal power supply 30, and provide the output voltage Vout to supply power to the load 20.

In this embodiment of this application, the electronic device 1 may include a plurality of power supply modules 10, and the plurality of power supply modules 10 provide the output voltage Vout to supply power to the load 20. In an embodiment, the electronic device 1 may include a plurality of loads 20, and the power supply module 10 provides a plurality of output voltages Vout to supply power to the plurality of loads 20. In an embodiment, the electronic device 1 may include a plurality of power supply modules 10, and a plurality of loads 20, and the plurality of power supply modules 10 respectively provide a plurality of output voltages Vout to supply power to the plurality of loads 20.

In this embodiment of this application, the input voltage Vin may be an alternating-current voltage, and the internal power supply 30 or the power supply module 10 may include an alternating-current/direct-current converter circuit. In this embodiment of this application, the input voltage Vin may be a direct-current voltage, the internal power supply 30 may include an energy storage apparatus, and the power supply module 10 may include a direct-current converter circuit. Correspondingly, when the electronic device 1 works independently, the energy storage apparatus of the internal power supply 30 may supply power to the power supply module 10.

In this embodiment of this application, the input voltage Vin may be a direct-current voltage. The load 20 of the electronic device 1 may include one or more of a power-consuming apparatus, an energy storage apparatus, or an external device. In an embodiment, the load 20 may be the power-consuming apparatus of the electronic device 1, for example, a processor or a display. In an embodiment, the load 20 may be the energy storage apparatus of the electronic device 1, for example, a battery. In an embodiment, the load 20 may be the external device of the electronic device 1, for example, another electronic device like a display or a keyboard.

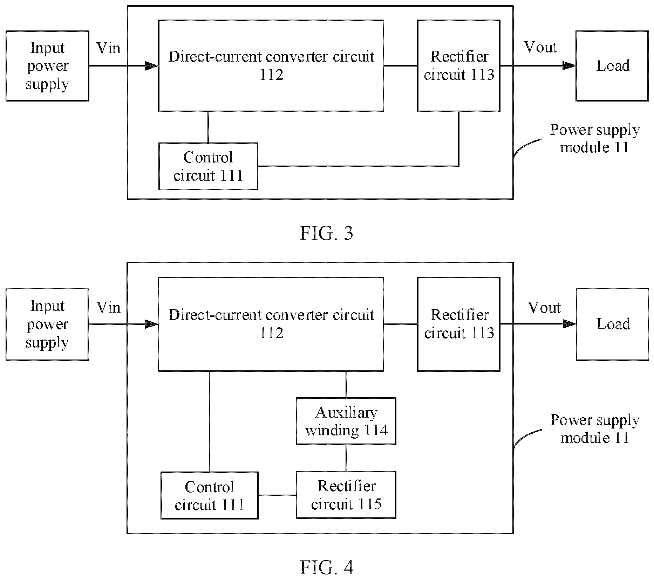

FIG. 3 is a diagram of a power supply module according to an embodiment of this application. As shown in FIG. 3, the power supply module 11 includes a control circuit 111, a direct-current converter circuit 112, and a rectifier circuit 113. The power supply module 11 is configured to: receive the input voltage Vin provided by an input power supply, and provide the output voltage Vout to supply power to the load 20.

The control circuit 111 is connected to the direct-current converter circuit 112 and the rectifier circuit 113. The control circuit 111 is configured to control running of the direct-current converter circuit 112 and the rectifier circuit 113. An input of the direct-current converter circuit 112 is connected to the input power supply, and is configured to receive the input voltage Vin provided by the input power supply. In this embodiment of this application, the input voltage Vin provided by the input power supply is a direct-current voltage. In this embodiment of this application, the direct-current converter circuit 112 includes a main power transistor, an auxiliary power transistor, and a transformer. The transformer includes a primary-side winding and a secondary-side winding. In an embodiment, the direct-current converter circuit 112 includes an asymmetric half-bridge flyback converter circuit. In an embodiment, the direct-current converter circuit 112 includes an active clamp flyback converter circuit. The rectifier circuit 113 is configured to: receive power supplied by the transformer in the direct-current converter circuit 112, and provide the output voltage Vout to supply power to the load 20. That is, the direct-current converter circuit 112 supplies power to the load 20 through the rectifier circuit 113. In this embodiment of this application, the rectifier circuit 113 includes a switching transistor and a capacitor.

FIG. 4 is another diagram of the power supply module according to an embodiment of this application. As shown in FIG. 4, the power supply module 11 includes the control circuit 111, the direct-current converter circuit 112, the rectifier circuit 113, an auxiliary winding 114, and a rectifier circuit 115. The power supply module 11 is configured to: receive the input voltage Vin provided by the input power supply, and provide the output voltage Vout to supply power to the load 20. It should be understood that a part in FIG. 4 that is the same as that in FIG. 3 is not described again. The auxiliary winding 114 is configured to receive power supplied by the transformer in the direct-current converter circuit 112. The rectifier circuit 115 is configured to: receive power supplied by the auxiliary winding 114, and supply power to the control circuit 111. That is, the auxiliary winding supplies power to the control circuit 111 through the rectifier circuit 115. In this embodiment of this application, the rectifier circuit 115 includes a switching transistor and a capacitor.

In this embodiment of this application, the primary-side winding is a winding that is placed at a primary stage of the transformer and that is responsible for inputting a voltage and a current. The secondary-side winding is a winding that is placed at a secondary stage of the transformer and that is responsible for outputting a voltage and a current. The auxiliary winding is a winding that is coupled to the transformer and that supplies power to a control apparatus, and the like.

It should be noted that, in embodiments of this application, each of the main power transistor, the auxiliary power transistor, and the switching transistor may be a metal-oxide-semiconductor field-effect transistor (Metal-Oxide-Semiconductor Field-Effect Transistor, MOSFET), an insulated gate bipolar transistor (Insulated Gate Bipolar Transistor, IGBT), a thyristor, a bipolar power transistor (bipolar power transistor), or a wide-bandgap semiconductor field-effect transistor.

In embodiments of this application, the main power transistor, the auxiliary power transistor, and the switching transistor may be different types of transistors. For example, the main power transistor is a MOSFET, the auxiliary power transistor is an IGBT, and the switching transistor is a wide-bandgap semiconductor field-effect transistor. Alternatively, the main power transistor, the auxiliary power transistor, and the switching transistor may be transistors of a same type. For example, the main power transistor, the auxiliary power transistor, and the switching transistor are all MOSFETs. It may be understood that in embodiments of this application, only an example in which the main power transistor, the auxiliary power transistor, and the switching transistor are MOSFETs is used for description. However, transistor types of the main power transistor, the auxiliary power transistor, and the switching transistor are not limited in embodiments of this application.

In embodiments of this application, the main power transistor, the auxiliary power transistor, and the switching transistor are driven in a manner of being turned on at a high level and turned off at a low level. For example, when the main power transistor receives a high-level drive signal, the main power transistor is turned on. When the main power transistor receives a low-level drive signal, the main power transistor is turned off. It may be understood that in embodiments of this application, the main power transistor, the auxiliary power transistor, and the switching transistor may alternatively be driven in another manner. A driving manner of the main power transistor, the auxiliary power transistor, and the switching transistor is not limited in embodiments of this application.

The control circuit provided in embodiments of this application may include a pulse-width modulation (Pulse-width modulation, PWM) controller, a central processing unit (central processing unit, CPU), another general purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate, a transistor logic device, or the like.

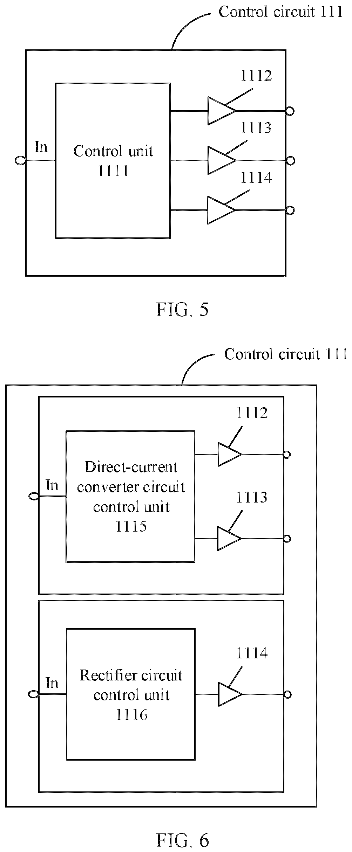

FIG. 5 is a schematic of the control circuit of the power supply module according to an embodiment of this application. As shown in FIG. 5, the control circuit 111 includes a control unit 1111, a main power transistor driver 1112, an auxiliary power transistor driver 1113, and a rectifier circuit driver 1114. The main power transistor driver 1112 and the auxiliary power transistor driver 1113 are respectively configured to control the main power transistor and the auxiliary power transistor in the direct-current converter circuit 112. The rectifier circuit driver 1114 is configured to control the rectifier circuit 113 in FIG. 3 and the rectifier circuit 115 in FIG. 4.

FIG. 6 is another schematic of the control circuit of the power supply module according to an embodiment of this application. As shown in FIG. 6, the control circuit 111 includes a direct-current converter circuit control unit 1115, a rectifier circuit control unit 1116, the main power transistor driver 1112, the auxiliary power transistor driver 1113, and the rectifier circuit driver 1114. The direct-current converter circuit control unit 1115 is configured to control the main power transistor driver 1112 and the auxiliary power transistor driver 1113. The rectifier circuit control unit 1116 is configured to control the rectifier circuit driver 1114. The main power transistor driver 1112 and the auxiliary power transistor driver 1113 are respectively configured to control the main power transistor and the auxiliary power transistor in the direct-current converter circuit 112. The rectifier circuit driver 1114 is configured to control the rectifier circuit 113 in FIG. 3 and the rectifier circuit 115 in FIG. 4.

In this embodiment of this application, the control circuit may use a circuit structure shown in FIG. 5, or may use a circuit structure shown in FIG. 6. The control circuit provided in embodiments of this application may alternatively use another circuit structure that can implement the technical solutions of this application. A circuit structure of the control circuit is not limited in embodiments of this application.

According to embodiments of this application, the power supply module and the control circuit of the power supply module may control the rectifier circuit to discharge to the transformer in the direct-current converter circuit, to reduce the voltage difference between the source and the drain of the main power transistor in the direct-current converter circuit, so as to reduce a switching loss of the main power transistor, and further improve power conversion efficiency of the power supply module and an electronic device in which the power supply module is located.

In embodiments of this application, when the power supply module 11 runs, the control circuit 111 controls the direct-current converter circuit 112 to operate in a discontinuous conduction mode. Specifically, the control circuit 111 controls the main power transistor and the auxiliary power transistor in the direct-current converter circuit 112 to be alternately turned on and off. For example, in the discontinuous conduction mode, the auxiliary power transistor is turned on only after the main power transistor is turned off, the main power transistor is turned on only after the auxiliary power transistor is turned off, and the main power transistor and the auxiliary power transistor are not turned on at the same time. For example, within a period of the discontinuous conduction mode, the main power transistor is first turned on, then the main power transistor is turned off, then the auxiliary power transistor is turned on, and finally the auxiliary power transistor is turned off. Next, the main power transistor is turned on again, to enter a next period of the discontinuous conduction mode.

In this embodiment of this application, when the power supply module 11 runs, the direct-current converter circuit 112 operates in the discontinuous conduction mode. Within a period of the discontinuous conduction mode, the control circuit 111 controls the main power transistor and the auxiliary power transistor in the direct-current converter circuit 112 to be alternately turned on and off. After the auxiliary power transistor is turned off and before the main power transistor is turned on, the control circuit 111 controls the rectifier circuit 113 in FIG. 3 or the rectifier circuit 115 in FIG. 4 to discharge to the transformer in the direct-current converter circuit 112 for preset duration. In an embodiment, the control circuit 111 may control, based on the voltage difference between the drain and the source of the main power transistor in the direct-current converter circuit 112, the rectifier circuit 113 in FIG. 3 or the rectifier circuit 115 in FIG. 4 to discharge to the transformer in the direct-current converter circuit 112.

In an embodiment, the control circuit 111 may control the rectifier circuit 113 to discharge to the transformer through the secondary-side winding of the transformer in the direct-current converter circuit 112, as shown in FIG. 3. The control circuit 111 may control, based on a comparison result of the voltage difference between the drain and the source of the main power transistor in the direct-current converter circuit 112 and the input voltage Vin, the rectifier circuit 113 to discharge to the transformer through the secondary-side winding of the transformer in the direct-current converter circuit 112. Alternatively, the control circuit 111 may control, based on a comparison result of the voltage difference between the drain and the source of the main power transistor in the direct-current converter circuit 112, and a sum of the input voltage Vin and a primary-side winding coupling voltage, the rectifier circuit 113 to discharge to the transformer through the secondary-side winding of the transformer in the direct-current converter circuit 112. After the preset duration, the control circuit 111 controls the rectifier circuit 113 to stop discharging.

In an embodiment, the control circuit 111 may control the rectifier circuit 115 to discharge to the transformer in the direct-current converter circuit 112 through the auxiliary winding 114, as shown in FIG. 4. The control circuit 111 may control, based on a comparison result of the voltage difference between the drain and the source of the main power transistor in the direct-current converter circuit 112 and the input voltage Vin, the rectifier circuit 115 to discharge to the transformer through the auxiliary winding 114. Alternatively, the control circuit 111 may control, based on a comparison result of the voltage difference between the drain and the source of the main power transistor in the direct-current converter circuit 112, and a sum of the input voltage Vin and a primary-side winding coupling voltage, the rectifier circuit 115 to discharge to the transformer through the auxiliary winding 114. After the preset duration, the control circuit 111 controls the rectifier circuit 115 to stop discharging.

After discharging is stopped, the control circuit 111 controls the main power transistor to be turned on based on a comparison result of the voltage difference between the drain and the source of the main power transistor and a preset voltage value. In this embodiment of this application, the control circuit 111 may detect the voltage difference between the drain and the source of the main power transistor in one or more manners.

In an embodiment, the control circuit 111 may detect the voltage difference between two terminals, namely, the drain and the source of the main power transistor. For example, the voltage difference between the two terminals, namely, the drain and the source of the main power transistor, is less than or equal to the preset voltage value, and correspondingly, the control circuit 111 controls the main power transistor to be turned on.

In an embodiment, the direct-current converter circuit 112 is an asymmetric half-bridge flyback converter circuit, and the control circuit 111 may detect a source voltage of the main power transistor. In a connection manner of the asymmetric half-bridge flyback converter circuit, the drain of the main power transistor is connected to the input power supply, and a drain voltage of the main power transistor is equal to the input voltage Vin. Correspondingly, the voltage difference between the drain and the source of the main power transistor is equal to a difference between the source voltage of the main power transistor and the input voltage Vin. For example, the difference between the source voltage of the main power transistor and the input voltage Vin is less than or equal to the preset voltage value, and correspondingly, the control circuit 111 controls the main power transistor to be turned on. In another connection manner of the asymmetric half-bridge flyback converter circuit, the source of the main power transistor is connected to a reference ground, and the source voltage of the main power transistor is equal to a reference voltage. Correspondingly, the voltage difference between the drain and the source of the main power transistor is equal to the drain voltage of the main power transistor. For example, the drain voltage of the main power transistor is less than or equal to the preset voltage value, and correspondingly, the control circuit 111 controls the main power transistor to be turned on.

In an embodiment, the direct-current converter circuit is an active clamp flyback converter circuit, and the control circuit 111 may detect the drain voltage of the main power transistor. In the active clamp flyback converter circuit, the source of the main power transistor is connected to the reference ground. In this embodiment of this application, a voltage of the reference ground is equal to 0. Correspondingly, the voltage difference between the drain and the source of the main power transistor is equal to the drain voltage of the main power transistor. For example, the drain voltage of the main power transistor is less than or equal to the preset voltage value, and correspondingly, the control circuit 111 controls the main power transistor Q1 to be turned on.

In an embodiment, the control circuit 111 may detect a bridge arm midpoint voltage. In this embodiment of this application, a bridge arm midpoint is a coupling link point between the main power transistor and the auxiliary power transistor of the direct-current converter circuit. In the active clamp flyback converter circuit, the source of the main power transistor is connected to the reference ground, and the drain voltage of the main power transistor is equal to the bridge arm midpoint voltage. Correspondingly, the voltage difference between the drain and the source of the main power transistor is equal to the bridge arm midpoint voltage. In a connection manner of the asymmetric half-bridge flyback converter circuit, the drain of the main power transistor is connected to the input power supply, and the source voltage of the main power transistor is equal to the bridge arm midpoint voltage. Correspondingly, the voltage difference between the drain and the source of the main power transistor is equal to the difference between the input voltage Vin and the bridge arm midpoint voltage. In another connection manner of the asymmetric half-bridge flyback converter circuit, the source of the main power transistor is connected to the reference ground, and the drain voltage of the main power transistor is equal to the bridge arm midpoint voltage. Correspondingly, the voltage difference between the drain and the source of the main power transistor is equal to a difference between the bridge arm midpoint voltage and the reference voltage.

In this embodiment of this application, the preset voltage value may be any value greater than 0 and less than the input voltage Vin. For example, the input voltage Vin is usually 90 V to 264 V, and the preset voltage value may be set to 0 V, 5 V, 6 V, 10 V, 20 V, or the like. A smaller preset voltage value indicates a smaller switching loss when the main power transistor is turned on. When the preset voltage value is 0 V, the switching loss of the main power transistor is the smallest. In view of process costs of a power switching transistor, the preset voltage value may be set to a value greater than zero, for example, 5 V, 6 V, 10 V, or 20 V, so that not only the switching loss of the main power transistor can be reduced, but also costs of the power supply module can be reduced.

The power supply module and the control circuit of the power supply module provided in embodiments of this application control the rectifier circuit to discharge to the transformer for the preset duration, and after the preset duration, the control circuit controls the rectifier circuit to stop discharging, so that the voltage difference between the drain and the source of the main power transistor in the asymmetric half-bridge flyback converter circuit can be reduced, and the main power transistor can be turned on when the voltage difference between the drain and the source of the main power transistor is small. This reduces the switching loss of the main power transistor, and further improves power conversion efficiency of the power supply module and an electronic device in which the power supply module is located.

The direct-current converter circuit 112 in the power supply module 11 provided in this embodiment of this application may be an asymmetric half-bridge flyback converter circuit.

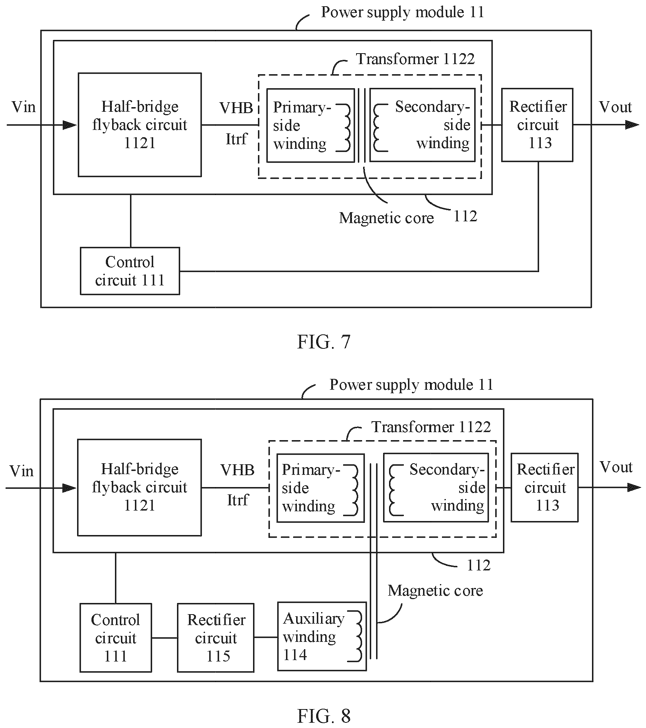

FIG. 7 is a schematic of a circuit of the power supply module according to an embodiment of this application. As shown in FIG. 7, the power supply module 11 includes the control circuit 111, the asymmetric half-bridge flyback converter circuit 112, and the rectifier circuit 113. The control circuit 111 is separately connected to the asymmetric half-bridge flyback converter circuit 112 and the rectifier circuit 113, and is configured to control running of the asymmetric half-bridge flyback converter circuit 112 and the rectifier circuit 113. An input of the asymmetric half-bridge flyback converter circuit 112 is connected to the input power supply to receive the input voltage Vin. An input of the rectifier circuit 113 is connected to an output of the asymmetric half-bridge flyback converter circuit 112, and an output of the rectifier circuit 113 provides the output voltage Vout to supply power to the load 20.

The asymmetric half-bridge flyback converter circuit 112 includes a half-bridge flyback circuit 1121 and a transformer 1122. In this embodiment of this application, the half-bridge flyback circuit 1121 includes a main power transistor and an auxiliary power transistor. The control circuit 111 is configured to control turn-on and turn-off of the main power transistor and the auxiliary power transistor in the half-bridge flyback circuit 1121. The transformer 1122 includes a primary-side winding and a secondary-side winding. The primary-side winding and the secondary-side winding of the transformer 1122 are coupled through a magnetic core.

An input of the half-bridge flyback circuit 1121 is connected to the input power supply, and an output of the half-bridge flyback circuit 1121 is connected to the primary-side winding of the transformer 1122. The input of the rectifier circuit 113 is connected to the secondary-side winding of the transformer 1122, and the output of the rectifier circuit 113 provides the output voltage Vout to supply power to the load 20.

FIG. 8 is another schematic of a circuit of the power supply module according to an embodiment of this application. As shown in FIG. 8, the power supply module 11 includes the control circuit 111, the asymmetric half-bridge flyback converter circuit 112, the rectifier circuit 113, the auxiliary winding 114, and the rectifier circuit 115. It may be understood that a part in FIG. 8 that is the same as that in FIG. 7 is not described again. The control circuit 111 is connected to the asymmetric half-bridge flyback converter circuit 112 and the rectifier circuit 115, and is configured to control running of the asymmetric half-bridge flyback converter circuit 112 and the rectifier circuit 115. The auxiliary winding 114 is coupled to the primary-side winding of the transformer 1122 through a magnetic core of the transformer 1122. The auxiliary winding 114 is configured to supply power to the control circuit 111 through the rectifier circuit 115. Specifically, an input of the rectifier circuit 115 is connected to the auxiliary winding 114, and an output of the rectifier circuit 115 is configured to supply power to the control circuit 111.

When the power supply module 11 shown in FIG. 7 and FIG. 8 runs, the control circuit 111 controls the asymmetric half-bridge flyback converter circuit 112 to operate in a discontinuous conduction mode. Specifically, the half-bridge flyback circuit 1121 receives the input voltage Vin provided by the input power supply, and the control circuit 111 controls the main power transistor and the auxiliary power transistor in the half-bridge flyback circuit 1121 to be alternately turned on and off, to excite the primary-side winding of the transformer 1122. As shown in FIG. 7, the primary-side winding of the transformer 1122 may transmit energy to the secondary-side winding of the transformer 1122. As shown in FIG. 8, the primary-side winding of the transformer 1122 may transmit energy to the secondary-side winding of the transformer 1122 and the auxiliary winding 114.

Within a period of the discontinuous conduction mode, after the auxiliary power transistor of the asymmetric half-bridge flyback converter circuit 112 is turned off and before the main power transistor is turned on, the control circuit 111 controls the rectifier circuit 113 in FIG. 7 or the rectifier circuit 115 in FIG. 8 to discharge to the transformer 1122 for preset duration.

In an embodiment, after the auxiliary power transistor in the half-bridge flyback circuit 1121 is turned off and before the main power transistor is turned on, the control circuit 111 may control the rectifier circuit 113 to discharge to the transformer 1122 within the preset duration through the secondary-side winding of the transformer 1122. As shown in FIG. 7, after the auxiliary power transistor is turned off and before the main power transistor is turned on, the control circuit 111 controls the rectifier circuit 113 to discharge to the transformer 1122 through the secondary-side winding of the transformer 1122, and after the preset duration, the control circuit 111 controls the rectifier circuit 113 to stop discharging. Specifically, the primary-side winding and the secondary-side winding of the transformer 1122 are coupled through a magnetic core. A discharge current generated by the rectifier circuit 113 during discharging flows through the secondary-side winding of the transformer 1122, and the primary-side winding of the transformer 1122 generates a coupling voltage. The primary-side winding of the transformer 1122 and a parasitic capacitor of the main power transistor in the half-bridge flyback circuit 1121 form an LC oscillation circuit.

After the rectifier circuit 113 discharges for the preset duration, the control circuit 111 controls the rectifier circuit 113 to stop discharging. The rectifier circuit 113 stops outputting the discharge current to the secondary-side winding of the transformer 1122, and no coupling voltage is generated at two terminals of the primary-side winding of the transformer 1122. Correspondingly, a voltage difference between a drain and a source of the main power transistor in the half-bridge flyback circuit 1121 decreases.

In an embodiment, after the auxiliary power transistor in the half-bridge flyback circuit 1121 is turned off and before the main power transistor is turned on, the control circuit 111 may control the rectifier circuit 115 to discharge to the transformer 1122 for the preset duration through the auxiliary winding. As shown in FIG. 8, after the auxiliary power transistor is turned off and before the main power transistor is turned on, the control circuit 111 controls the rectifier circuit 115 to start discharging to the transformer 1122 through the auxiliary winding 114, and after the preset duration, the control circuit 111 controls the rectifier circuit 115 to stop discharging. Specifically, the primary-side winding of the transformer 1122 and the auxiliary winding 114 are coupled through a magnetic core.

A discharge current generated by the rectifier circuit 115 during discharging flows through the auxiliary winding 114, and the primary-side winding of the transformer 1122 generates a coupling voltage. After the rectifier circuit 115 discharges for the preset duration, the control circuit 111 controls the rectifier circuit 115 to stop discharging. The rectifier circuit 115 stops outputting the discharge current to the auxiliary winding 114, and no coupling voltage is generated at two terminals of the primary-side winding of the transformer 1122. Correspondingly, a voltage difference between a drain and a source of the main power transistor in the half-bridge flyback circuit 1121 decreases.

In this embodiment of this application, the preset duration of discharging of the rectifier circuit 113 in FIG. 7 or the rectifier circuit 115 in FIG. 8 may be determined based on a current direction of the primary-side winding of the transformer 1122.

In an implementation, the control circuit 111 may control, based on a comparison result of the voltage difference between the drain and the source of the main power transistor in the half-bridge flyback circuit 1121 and the input voltage Vin, the control circuit 111 controls the rectifier circuit 113 in FIG. 7 or the rectifier circuit 115 in FIG. 8 to start discharging to the transformer. For example, when a difference between the voltage difference between the drain and the source of the main power transistor in the half-bridge flyback circuit 1121 and the input voltage Vin is less than or equal to a preset value, the control circuit 111 controls the rectifier circuit 113 in FIG. 7 or the rectifier circuit 115 in FIG. 8 to start discharging to the transformer.

After the rectifier circuit 113 in FIG. 7 or the rectifier circuit 115 in FIG. 8 stops discharging to the transformer 1122, the control circuit 111 controls the main power transistor to be turned on based on the comparison result of the voltage difference between the drain and the source of the main power transistor in the half-bridge flyback circuit 1121 and the preset voltage value. For example, when the voltage difference between the drain and the source of the main power transistor is less than or equal to the preset voltage value, the control circuit 111 controls the main power transistor to be turned on. After the main power transistor is turned on, the asymmetric half-bridge flyback converter circuit 112 operates in a next period of the discontinuous conduction mode.

In this embodiment of this application, the preset voltage value may be any value greater than 0 and less than the input voltage Vin. For example, the input voltage Vin is usually 90 V to 264 V, and the preset voltage value may be set to 0 V, 5 V, 6 V, 10 V, 20 V, or the like. A smaller preset voltage value indicates a smaller switching loss when the main power transistor is turned on. When the preset voltage value is 0 V, the switching loss of the main power transistor is the smallest. In view of process costs of a power switching transistor, the preset voltage value may be set to a value greater than zero, for example, 5 V, 6 V, 10 V, or 20 V, so that not only the switching loss of the main power transistor can be reduced, but also costs of the power supply module can be reduced.

The power supply module and the control circuit of the power supply module provided in embodiments of this application control the rectifier circuit to discharge to the transformer for the preset duration, and after the preset duration, the control circuit controls the rectifier circuit to stop discharging, so that the voltage difference between the drain and the source of the main power transistor in the asymmetric half-bridge flyback converter circuit can be reduced, and the main power transistor can be turned on when the voltage difference between the drain and the source of the main power transistor is small. This reduces the switching loss of the main power transistor, and further improves power conversion efficiency of the power supply module and an electronic device in which the power supply module is located.

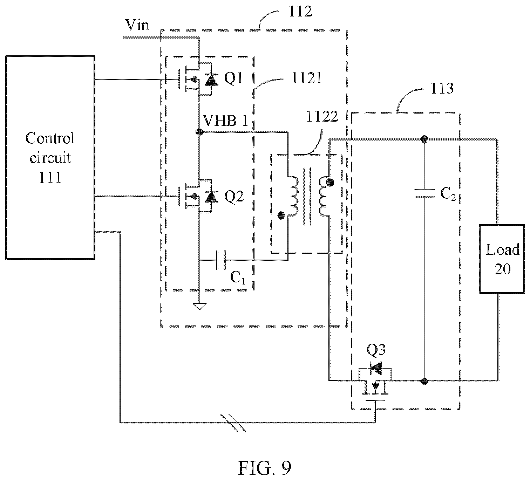

FIG. 9 is a schematic of a circuit of the power supply module according to an embodiment of this application. As shown in FIG. 9, the power supply module 11 includes the control circuit 111, the asymmetric half-bridge flyback converter circuit 112, and the rectifier circuit 113. The asymmetric half-bridge flyback converter circuit 112 includes the half-bridge flyback circuit 1121 and the transformer 1122. The half-bridge flyback circuit 1121 includes a main power transistor Q1, an auxiliary power transistor Q2, and a resonant capacitor C₁. The transformer 1122 includes a primary-side winding and a secondary-side winding. The rectifier circuit 113 includes a switching transistor Q3 and a capacitor C₂.

The main power transistor Q1 and the auxiliary power transistor Q2 in the half-bridge flyback circuit 1121 are connected in series. For example, a drain of the main power transistor Q1 receives the input voltage Vin, a source of the main power transistor Q1 is connected to a drain of the auxiliary power transistor Q2, and a source of the auxiliary power transistor Q2 is connected to the reference ground.

The primary-side winding and the secondary-side winding of the transformer 1122 are coupled through a magnetic core. The primary-side winding of the transformer 1122 is connected in parallel between the drain and the source of the auxiliary power transistor Q2 through the resonant capacitor C₁. For example, one terminal of the resonant capacitor C₁ is connected to the source of the auxiliary power transistor Q2, the other terminal of the resonant capacitor C₁ is connected to a non-dotted terminal of the primary-side winding, and a dotted terminal of the primary-side winding is connected to the drain of the auxiliary power transistor Q2. The secondary-side winding of the transformer 1122 provides the output voltage Vout through the rectifier circuit 113 to supply power to the load 20. For example, a drain of the switching transistor Q3 is connected to a non-dotted terminal of the secondary-side winding of the transformer 1122, a source of the switching transistor Q3 is connected to one terminal of the capacitor C₂, and the other terminal of the capacitor C₂ is connected to a dotted terminal of the secondary-side winding of the transformer 1122.

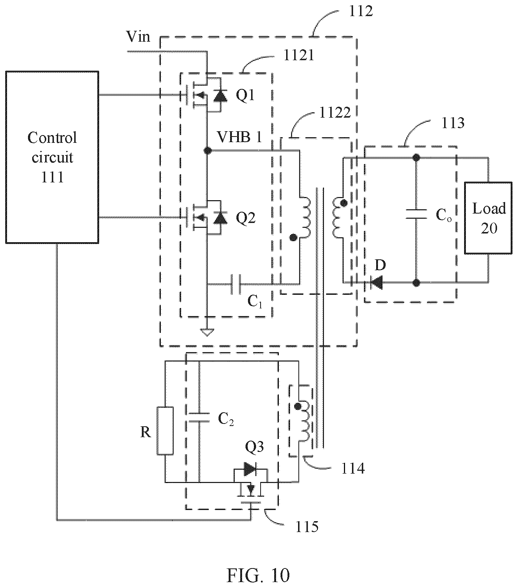

FIG. 10 is another schematic of a circuit of the power supply module according to an embodiment of this application. As shown in FIG. 10, the power supply module 11 includes the control circuit 111, the asymmetric half-bridge flyback converter circuit 112, the rectifier circuit 113, the auxiliary winding 114, and the rectifier circuit 115. It should be understood that a part in FIG. 10 that is the same as that in FIG. 9 is not described again. The auxiliary winding 114 is coupled to the primary-side winding of the transformer 1122 through a magnetic core. The rectifier circuit 115 includes the switching transistor Q3 and the capacitor C₂.

As shown in FIG. 10, the auxiliary winding 114 supplies power to the control circuit 111 through the rectifier circuit 115. For example, a non-dotted terminal of the auxiliary winding 114 is connected to the drain of the switching transistor Q3 in the rectifier circuit 115, the source of the switching transistor Q3 is connected to one terminal of the capacitor C₂, and a non-dotted terminal of the auxiliary winding 114 is connected to the other terminal of the capacitor C₂ in the rectifier circuit 113.

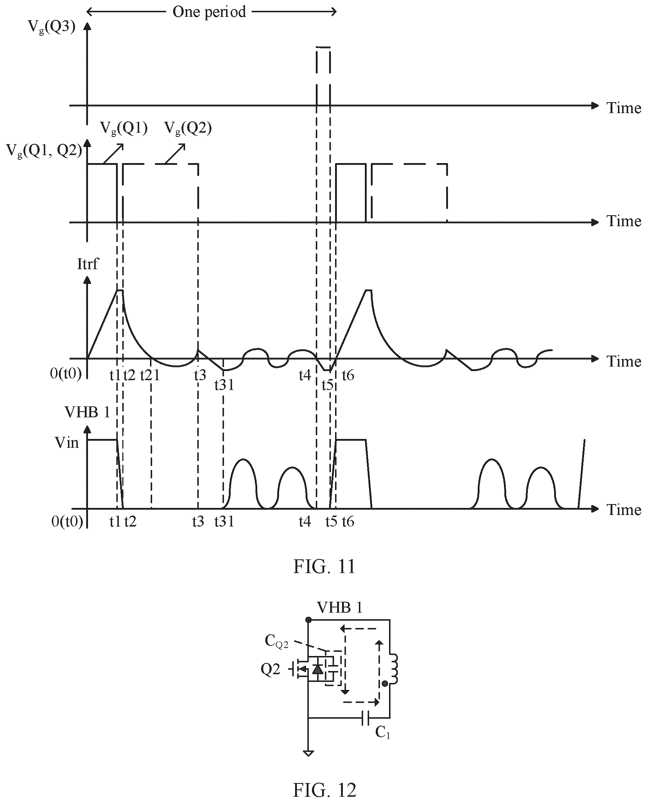

FIG. 11 is a diagram of a running process of the power supply module according to an embodiment of this application. As shown in FIG. 11, a solid line in V_{g}(Q1, Q2) represents a control signal V_{g}(Q1) sent by the control circuit 111 to the main power transistor Q1, and a dashed line in V_{g}(Q1, Q2) represents a control signal V_{g}(Q2) sent by the control circuit 111 to the auxiliary power transistor Q2. V_{g}(Q3) represents a control signal V_{g}(Q3) sent by the control circuit 111 to the switching transistor Q3. Itrf represents a primary-side winding current of the transformer 1122. The primary-side winding current Itrf of the transformer 1122 may flow from the source of the main power transistor Q1 to the primary-side winding of the transformer 1122, that is, in a clockwise direction. The primary-side winding current Itrf of the transformer 1122 may alternatively flow from the primary-side winding of the transformer 1122 to the source of the main power transistor Q1, that is, in an anticlockwise direction. VHB 1 represents a voltage of a series coupling point of the main power transistor Q1 and the auxiliary power transistor Q2. In this embodiment of this application, the series coupling point of the main power transistor Q1 and the auxiliary power transistor Q2 may also be referred to as a bridge arm midpoint.

With reference to FIG. 11, the following describes a running process of the power supply module 11 shown in FIG. 9 and FIG. 10 and a control function of the control circuit 111 thereof. As shown in FIG. 11, duration from a moment t0 to a moment t6 is a period of a discontinuous conduction mode, and a next period of the discontinuous conduction mode starts from the moment t6.

Before the moment t0, the power supply module 11 is in a standby state or an un-started state. The main power transistor Q1, the auxiliary power transistor Q2, and the switching transistor Q3 in the power supply module 11 are all in a turned-off state.

From the moment t0, the power supply module 11 starts to run, and the asymmetric half-bridge flyback converter circuit 112 operates in the discontinuous conduction mode. Specifically, the control circuit 111 controls the main power transistor Q1 and the auxiliary power transistor Q2 in the asymmetric half-bridge flyback converter circuit 112 to work in the discontinuous conduction mode.

At the moment t0, the control circuit 111 controls the main power transistor Q1 to be turned on, and the control circuit 111 controls the auxiliary power transistor Q2 and the switching transistor Q3 to be turned off. The primary-side winding current Itrf of the transformer 1122 increases in the clockwise direction, and the voltage VHB 1 of the bridge arm midpoint is equal to the input voltage Vin.

At a moment t1 after the moment t0, the control circuit 111 controls the auxiliary power transistor Q2 and the switching transistor Q3 to remain to be turned off, and the control circuit 111 controls the main power transistor Q1 to be turned off. That is, the control circuit 111 controls the auxiliary power transistor Q2 and the switching transistor Q3 to be turned off, and controls the main power transistor Q1 to be turned on for a period of time and then turned off. After the main power transistor Q1 is turned off, the primary-side winding current Itrf cannot change abruptly, and the primary-side winding current Itrf decreases slowly in the clockwise direction.

At a moment t2 after the moment t1, the control circuit 111 controls the main power transistor Q1 and the switching transistor Q3 to remain to be turned off, and the control circuit 111 controls the auxiliary power transistor Q2 to be turned on. That is, after controlling the main power transistor Q1 to be turned off for a period of time, the control circuit 111 controls the auxiliary power transistor Q2 to be turned on. After the auxiliary power transistor Q2 is turned on, the bridge arm midpoint is connected to the reference ground, and the voltage VHB 1 of the bridge arm midpoint is equal to a voltage of the reference ground. In this embodiment of this application, the voltage of the reference ground is 0.

At a moment t3 after the moment t2, the control circuit 111 controls the main power transistor Q1 and the switching transistor Q3 to remain to be turned off, and the control circuit 111 controls the auxiliary power transistor Q2 to be turned off. That is, after controlling the auxiliary power transistor Q2 to be turned on for a period of time, the control circuit 111 controls the auxiliary power transistor Q2 to be turned off.

At a moment t31 after the moment t3, the primary-side winding of the transformer 1122 and a parasitic capacitor of the main power transistor Q1 form an LC oscillation circuit. After the moment t31, the voltage VHB 1 of the bridge arm midpoint and the primary-side winding current Itrf oscillate.

At a moment t4 after the moment t31, the control circuit 111 controls the switching transistor Q3 to be turned on for preset duration, and the capacitor C₂ discharges to the transformer 1122 within the preset duration. Specifically, the auxiliary power transistor Q2 is turned off, and the main power transistor Q1 is not turned on at the moment t4. That is, after the auxiliary power transistor Q2 is turned off and before the main power transistor Q1 is turned on, the control circuit 111 controls the switching transistor Q3 in the rectifier circuit 113 to be turned on, and the capacitor C₂ in the rectifier circuit 113 discharges to the transformer 1122.

As shown in FIG. 9, the control circuit 111 controls the switching transistor Q3 in the rectifier circuit 113 to be turned on, and the capacitor C₂ in the rectifier circuit 113 discharges to the transformer 1122 through the secondary-side winding of the transformer 1122 at the moment t4. The switching transistor Q3 is in a turned-on state, the main power transistor Q1 and the auxiliary power transistor Q2 are in a turned-off state, and the secondary-side winding of the transformer 1122, the capacitor C₂, and the switching transistor Q3 form a loop. The capacitor C₂ may discharge to generate a voltage at two terminals of the secondary-side winding of the transformer 1122, and correspondingly, a coupling voltage is generated at two terminals of the primary-side winding of the transformer 1122.

As shown in FIG. 10, the control circuit 111 controls the switching transistor Q3 in the rectifier circuit 115 to be turned on, and the capacitor C₂ in the rectifier circuit 115 discharges to the transformer 1122 through the auxiliary winding 114 at the moment t4. The switching transistor Q3 is in a turned-on state, the main power transistor Q1 and the auxiliary power transistor Q2 are in a turned-off state, and the auxiliary winding 114 of the transformer 1122, the capacitor C₂, and the switching transistor Q3 form a loop. The capacitor C₂ may discharge to generate a voltage at two terminals of the auxiliary winding 114, and correspondingly, a coupling voltage is generated at two terminals of the primary-side winding of the transformer 1122.

In this embodiment of this application, a ratio of the voltage at the two terminals of the secondary-side winding of the transformer 1122 to a voltage at the two terminals of the primary-side winding of the transformer 1122 is equal to a ratio of a number of turns in the secondary-side winding of the transformer 1122 to a number of turns in the primary-side winding of the transformer 1122. In this embodiment of this application, a ratio of the voltage at the two terminals of the auxiliary winding 114 to a voltage at the two terminals of the primary-side winding of the transformer 1122 is equal to a ratio of a number of turns in the auxiliary winding 114 to a number of turns in the primary-side winding of the transformer 1122.

In an embodiment, after the auxiliary power transistor Q2 is turned off and before the main power transistor Q1 is turned on, if a difference between a voltage difference between the drain and the source of the main power transistor Q1 and the input voltage Vin is less than or equal to a preset voltage value, the control circuit 111 controls the switching transistor Q3 to be turned on, so that the capacitor C₂ discharges to the transformer 1122. A drain voltage of the main power transistor Q1 is equal to the input voltage Vin, and a source voltage of the main power transistor Q1 is equal to the voltage VHB 1 of the bridge arm midpoint. For example, when the voltage VHB 1 of the bridge arm midpoint oscillates to a lowest point at the moment t4, the voltage difference between the drain and the source of the main power transistor Q1 is closest to the input voltage Vin, and the difference between the voltage difference between the drain and the source of the main power transistor Q1 and the input voltage Vin is less than or equal to the preset voltage value. Correspondingly, the control circuit 111 controls the switching transistor Q3 to be turned on, and the capacitor C₂ discharges to the transformer 1122.

As shown in FIG. 9, when the voltage difference between the drain and the source of the main power transistor Q1 is equal to the input voltage Vin, the control circuit 111 controls the rectifier circuit 113 to discharge to the transformer 1122.

As shown in FIG. 10, when the voltage difference between the drain and the source of the main power transistor Q1 is equal to the input voltage Vin, the control circuit 111 controls the rectifier circuit 115 to discharge to the transformer 1122.

At a moment t5 after the moment t4, the control circuit 111 controls the switching transistor Q3 to be turned off, and the capacitor C₂ stops discharging to the transformer 1122. That is, after the control circuit 111 controls the switching transistor Q3 to be turned on for the preset duration, the control circuit 111 controls the switching transistor Q3 to be turned off. The preset duration may be determined based on a current direction of the primary-side winding current Itrf of the transformer 1122. After the switching transistor Q3 is turned off, the capacitor C₂ stops discharging. Correspondingly, no coupling voltage is generated at two terminals of the primary-side winding of the transformer 1122. The primary-side winding current Itrf is in the anticlockwise direction, and cannot change abruptly. The primary-side winding of the transformer 1122, a parasitic capacitor of the auxiliary power transistor Q2, and the resonant capacitor C₁ form a loop.

In an embodiment, the control circuit 111 controls the rectifier circuit 113 to stop discharging to the transformer 1122 through the secondary-side winding of the transformer 1122. As shown in FIG. 9, after the control circuit 111 controls the switching transistor Q3 to be turned on for the preset duration, the control circuit 111 controls the switching transistor Q3 to be turned off, and the capacitor C₂ stops discharging. Correspondingly, the rectifier circuit 113 stops discharging to the transformer 1122.

In an embodiment, the control circuit 111 controls the rectifier circuit 115 to stop discharging to the transformer 1122 through the auxiliary winding 114. As shown in FIG. 10, after the control circuit 111 controls the switching transistor Q3 to be turned on for the preset duration, the control circuit 111 controls the switching transistor Q3 to be turned off, and the capacitor C₂ stops discharging. Correspondingly, the rectifier circuit 115 stops discharging to the transformer 1122.

FIG. 12 is a diagram of a current direction of the primary-side winding of the transformer in the power supply module according to an embodiment of this application. A dashed arrow in FIG. 12 represents a current direction of the primary-side winding current Itrf. After the switching transistor Q3 is turned off, the capacitor C₂ stops discharging, and correspondingly, no coupling voltage is generated at two terminals of the primary-side winding, and the primary-side winding current Itrf cannot change abruptly and remains in the anticlockwise direction. As shown in FIG. 12, the primary-side winding of the transformer 1122, a parasitic capacitor C_{Q2} of the auxiliary power transistor Q2, and the resonant capacitor C₁ form a loop. The primary-side winding current Itrf charges the parasitic capacitor C_{Q2} of the auxiliary power transistor Q2, and a voltage of the parasitic capacitor C_{Q2} of the auxiliary power transistor Q2 increases. Correspondingly, the voltage VHB 1 of the bridge arm midpoint increases.

At the moment t6 after the moment t5, the control circuit 111 controls, based on a comparison result of the voltage difference between the drain and the source of the main power transistor Q1 and the preset voltage value, the main power transistor Q1 to be turned on. That is, after the control circuit 111 controls the switching transistor Q3 to be turned off, the control circuit 111 controls, based on the comparison result of the voltage difference between the drain and the source of the main power transistor Q1 and the preset voltage value, the main power transistor Q1 to be turned on. In this embodiment of this application, the control circuit 111 may detect the voltage difference between the drain and the source of the main power transistor Q1 in one or more manners.

In an embodiment, the control circuit 111 may detect the voltage difference between two terminals, namely, the drain and the source of the main power transistor Q1. For example, the voltage difference between the drain and the source of the main power transistor Q1 at the moment t6 is less than or equal to the preset voltage value. Correspondingly, the control circuit 111 controls the main power transistor Q1 to be turned on, and controls the auxiliary power transistor Q2 and the switching transistor Q3 to remain to be turned off.

In an embodiment, the control circuit 111 may detect a difference between a source voltage of the main power transistor Q1 and the input voltage Vin. As shown in FIG. 9 and FIG. 10, the drain of the main power transistor Q1 is connected to the input power supply. Correspondingly, a drain voltage of the main power transistor Q1 is equal to the input voltage Vin. A difference between the source voltage of the main power transistor Q1 and the input voltage Vin at the moment t6 is less than or equal to the preset voltage value. Correspondingly, the control circuit 111 controls the main power transistor Q1 to be turned on, and controls the auxiliary power transistor Q2 and the switching transistor Q3 to remain to be turned off.

In an embodiment, the control circuit 111 may detect the voltage VHB 1 of the bridge arm midpoint. As shown in FIG. 9 and FIG. 10, the source voltage of the main power transistor Q1 is equal to the voltage VHB 1 of the bridge arm midpoint, and the drain voltage of the main power transistor Q1 is equal to the input voltage Vin. The voltage difference between the drain and the source of the main power transistor Q1 is equal to a difference between the voltage VHB 1 of the bridge arm midpoint and the input voltage Vin. For example, the difference between the voltage VHB 1 of the bridge arm midpoint and the input voltage Vin is less than or equal to the preset voltage value at the moment t6. Correspondingly, the control circuit 111 controls the main power transistor Q1 to be turned on, and controls the auxiliary power transistor Q2 and the switching transistor Q3 to remain to be turned off.

After the moment t6, the main power transistor Q1 is turned on, and the auxiliary power transistor Q2 and the switching transistor Q3 are in a turned-off state. The asymmetric half-bridge flyback converter circuit 112 operates in a next period of the discontinuous conduction mode.

According to embodiments of this application, the power supply module and the control circuit of the power supply module may control the rectifier circuit to discharge to the transformer, to reduce the voltage difference between the source and the drain of the main power transistor in the asymmetric half-bridge flyback converter circuit, so as to reduce a switching loss of the main power transistor, and further improve power conversion efficiency of the power supply module and an electronic device in which the power supply module is located.

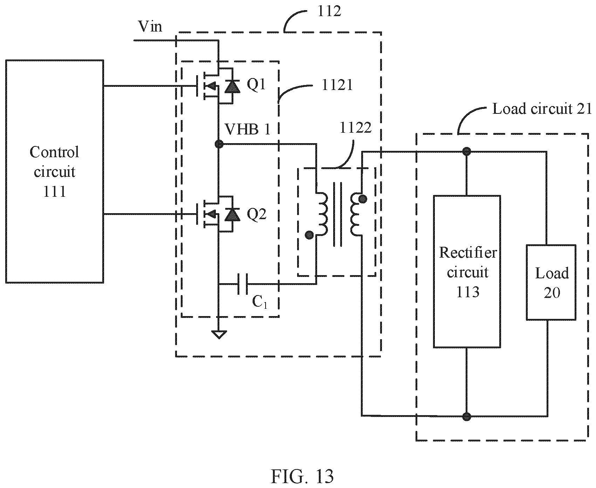

FIG. 13 is a diagram of the power supply module according to an embodiment of this application. A part in FIG. 13 that is the same as that in FIG. 9 and FIG. 10 is not described again. As shown in FIG. 13, the power supply module 11 includes a load circuit 21. The load circuit 21 includes the rectifier circuit 113 and the load 20. The rectifier circuit 113 supplies power to the load 20. The secondary-side winding of the transformer 1122 in the power supply module 11 supplies power to the load circuit 21. In an implementation, the load circuit 21 may alternatively be the power supply module 11 or an external device of the electronic device 1.

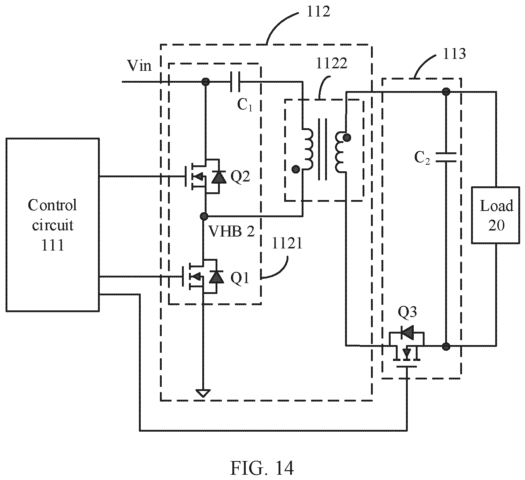

FIG. 14 is another diagram of the power supply module according to an embodiment of this application. A part in FIG. 14 that is the same as that in FIG. 9 and FIG. 10 is not described again. As shown in FIG. 14, the power supply module 11 includes the control circuit 111, the asymmetric half-bridge flyback converter circuit 112, and the rectifier circuit 113. The drain of the auxiliary power transistor Q2 of the half-bridge flyback circuit 1121 receives the input voltage Vin, the source of the auxiliary power transistor Q2 is connected in series to the drain of the main power transistor Q1, and the source of the main power transistor Q1 is connected to the reference ground. A non-dotted terminal of the primary-side winding of the transformer 1122 is connected to the drain of the auxiliary power transistor Q2 through the resonant capacitor C₁, and a dotted terminal of the primary-side winding of the transformer 1122 is connected to the source of the auxiliary power transistor Q2 and the drain of the main power transistor Q1. In this embodiment of this application, a series connection point between the source of the auxiliary power transistor Q2 and the drain of the main power transistor Q1 may be referred to as a bridge arm midpoint.

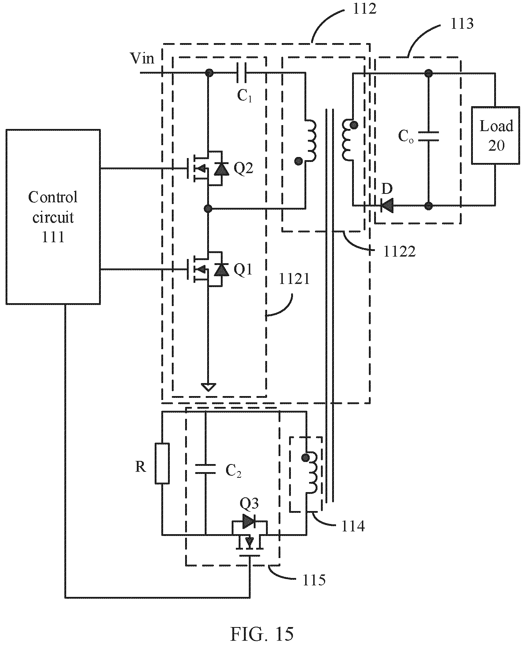

FIG. 15 is another diagram of the power supply module according to an embodiment of this application. A part in FIG. 15 that is the same as that in FIG. 14 is not described again. As shown in FIG. 15, the power supply module 11 includes the control circuit 111, the asymmetric half-bridge flyback converter circuit 112, the rectifier circuit 113, the auxiliary winding 114, and the rectifier circuit 115. The auxiliary winding 114 is coupled to the primary-side winding of the transformer 1122 through a magnetic core. The auxiliary winding 114 supplies power to the control circuit 111 through the rectifier circuit 115.

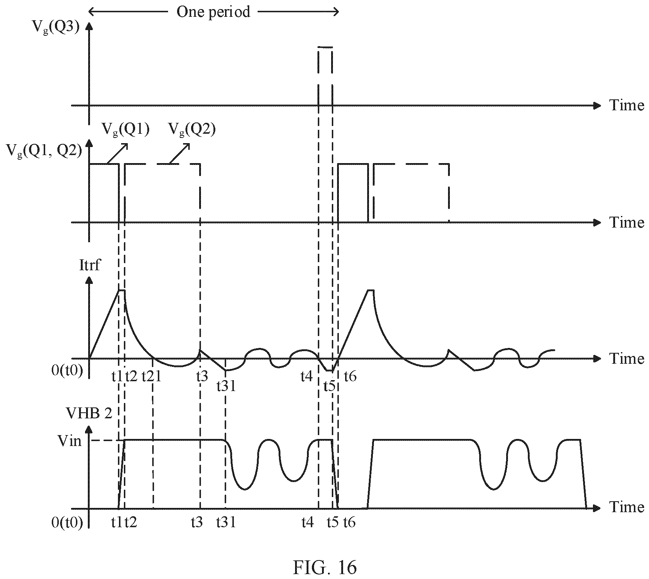

FIG. 16 is a diagram of a running process of the power supply module according to an embodiment of this application. A part in FIG. 16 that is the same as that in FIG. 11 is not described again. As shown in FIG. 16, VHB 2 represents a voltage of the series connection point between the source of the auxiliary power transistor Q2 and the drain of the main power transistor Q1 in FIG. 14 and FIG. 15, namely, a bridge arm middle point voltage.

With reference to FIG. 16, the following describes a running process of the power supply module 11 shown in FIG. 14 and FIG. 15 and a control function of the control circuit 111 thereof. As shown in FIG. 16, duration from a moment t0 to a moment t6 is a period of a DCM, and a next period of the DCM starts from the moment t6.

Before the moment t0, the power supply module 11 is in a standby state or an un-started state. The main power transistor Q1, the auxiliary power transistor Q2, and the switching transistor Q3 are all in a turned-off state.

From the moment t0, the power supply module 11 starts to run, and the asymmetric half-bridge flyback converter circuit 112 operates in the discontinuous conduction mode. Specifically, the control circuit 111 controls the main power transistor Q1 and the auxiliary power transistor Q2 to operate in the discontinuous conduction mode.

At the moment t0, the control circuit 111 controls the main power transistor Q1 to be turned on, and the control circuit 111 controls the auxiliary power transistor Q2 and the switching transistor Q3 to be turned off. The input voltage Vin provided by the input power supply is used to excite the primary-side winding of the transformer 1122. The primary-side winding current Itrf increases in the clockwise direction, and the voltage VHB 2 of the bridge arm midpoint is equal to a voltage of the reference ground. In this embodiment of this application, the voltage of the reference ground is equal to 0.

At a moment t1 after the moment t0, the control circuit 111 controls the auxiliary power transistor Q2 and the switching transistor Q3 to remain to be turned off, and the control circuit 111 controls the main power transistor Q1 to be turned off. That is, the control circuit 111 controls the auxiliary power transistor Q2 and the switching transistor Q3 to be turned off, and controls the main power transistor Q1 to be turned on for a period of time and then turned off. After the main power transistor Q1 is turned off, the parasitic capacitor inside the main power transistor Q1 is charged based on the input voltage Vin, and the voltage VHB 2 of the bridge arm midpoint increases.

At a moment t2 after the moment t1, the control circuit 111 controls the main power transistor Q1 and the switching transistor Q3 to remain to be turned off, and the control circuit 111 controls the auxiliary power transistor Q2 to be turned on. That is, after the control circuit 111 controls the main power transistor Q1 to be turned off for a period of time, the control circuit 111 controls the auxiliary power transistor Q2 to be turned on. After the auxiliary power transistor Q2 is turned on, the voltage VHB 2 of the bridge arm midpoint is equal to the input voltage Vin.

At a moment t3 after the moment t2, the control circuit 111 controls the main power transistor Q1 and the switching transistor Q3 to remain to be turned off, and the control circuit 111 controls the auxiliary power transistor Q2 to be turned off. That is, after the control circuit 111 controls the auxiliary power transistor Q2 to be turned on for a period of time, the control circuit 111 controls the auxiliary power transistor Q2 to be turned off. After the auxiliary power transistor Q2 is turned off, the voltage of the parasitic capacitor inside the main power transistor Q1 is equal to the voltage VHB 2 of the bridge arm midpoint. At the moment t3, the voltage VHB 2 is equal to the input voltage Vin.

At a moment t31 after the moment t3, the primary-side winding of the transformer 1122 and the parasitic capacitor of the main power transistor Q1 freely oscillate, and the voltage VHB 2 of the bridge arm midpoint and the primary-side winding current Itrf oscillate.

At a moment t4 after the moment t31, the control circuit 111 controls the switching transistor Q3 to be turned on, and the capacitor C₂ discharges to the transformer 1122. That is, after the auxiliary power transistor Q2 is turned off and before the main power transistor Q1 is turned on, the control circuit 111 controls the switching transistor Q3 to be turned on, and the capacitor C₂ discharges to the transformer 1122. The capacitor C₂ may discharge to generate a voltage at two terminals of the secondary-side winding or the auxiliary winding 114 of the transformer 1122, and correspondingly, a coupling voltage is generated at two terminals of the primary-side winding of the transformer 1122. Correspondingly, the voltage of the voltage VHB 2 of the bridge arm midpoint is equal to the input voltage Vin.

As shown in FIG. 14, the control circuit 111 controls the switching transistor Q3 in the rectifier circuit 113 to be turned on, and the capacitor C₂ in the rectifier circuit 113 discharges to the transformer 1122 through the secondary-side winding of the transformer 1122. Specifically, the switching transistor Q3 is in a turned-on state, the main power transistor Q1 and the auxiliary power transistor Q2 are in a turned-off state, and the secondary-side winding of the transformer 1122, the capacitor C₂, and the switching transistor Q3 form a loop.

As shown in FIG. 15, the control circuit 111 controls the switching transistor Q3 in the rectifier circuit 115 to be turned on, and the capacitor C₂ in the rectifier circuit 115 discharges to the transformer 1122 through the auxiliary winding 114. Specifically, the switching transistor Q3 is in a turned-on state, the main power transistor Q1 and the auxiliary power transistor Q2 are in a turned-off state, and the auxiliary winding 114 of the transformer 1122, the capacitor C₂, and the switching transistor Q3 form a loop.

In an embodiment, after the auxiliary power transistor Q2 is turned off and before the main power transistor Q1 is turned on, if a voltage difference between the drain and the source of the main power transistor Q1 is equal to or less than the input voltage Vin, the control circuit 111 controls the switching transistor Q3 to be turned on, so that the capacitor C₂ discharges to the transformer 1122. After the auxiliary power transistor Q2 is turned off, the voltage VHB 2 of the bridge arm midpoint and the primary-side winding current Itrf oscillate. The source of the main power transistor Q1 is connected to the reference ground, and the source voltage of the main power transistor Q1 is equal to the reference voltage. The drain voltage of the main power transistor Q1 is equal to the voltage VHB 2 of the bridge arm midpoint. When the voltage VHB 2 of the bridge arm midpoint oscillates to a maximum value, the voltage difference between the drain and the source of the main power transistor Q1 is approximately equal to or less than the input voltage Vin.

At a moment t5 after the moment t4, after the control circuit 111 controls the switching transistor Q3 to be turned on for preset duration, the control circuit 111 controls the switching transistor Q3 to be turned off. That is, the control circuit 111 controls the switching transistor Q3 to be turned off, and the capacitor C₂ stops discharging to the transformer 1122. The preset duration may be determined based on a current direction of the primary-side winding current Itrf of the transformer 1122. After the switching transistor Q3 is turned off, the capacitor C₂ stops discharging. Correspondingly, no coupling voltage is generated at two terminals of the primary-side winding of the transformer 1122. In this case, the parasitic capacitor of the main power transistor Q1 discharges, and the voltage VHB 2 of the bridge arm midpoint begins to decrease.

As shown in FIG. 14, after the control circuit 111 controls the switching transistor Q3 to be turned on for the preset duration, the control circuit 111 controls the switching transistor Q3 to be turned off, and the rectifier circuit 113 stops discharging to the transformer 1122.

As shown in FIG. 15, after the control circuit 111 controls the switching transistor Q3 to be turned on for the preset duration, the control circuit 111 controls the switching transistor Q3 to be turned off, and the rectifier circuit 115 stops discharging to the transformer 1122.

At the moment t6 after the moment t5, the control circuit 111 controls, based on the comparison result of the voltage difference between the drain and the source of the main power transistor Q1 and the preset voltage value, the main power transistor Q1 to be turned on. In this embodiment of this application, the control circuit 111 may detect the voltage difference between the drain and the source of the main power transistor Q1 in one or more manners.

In an embodiment, the control circuit 111 may detect the voltage difference between two terminals, namely, the drain and the source of the main power transistor Q1. For example, the voltage difference between the drain and the source of the main power transistor Q1 at the moment t6 is less than or equal to the preset voltage value. Correspondingly, the control circuit 111 controls the main power transistor Q1 to be turned on, and controls the auxiliary power transistor Q2 and the switching transistor Q3 to remain to be turned off.

In an embodiment, the control circuit 111 may detect the drain voltage of the main power transistor Q1. As shown in FIG. 14 and FIG. 15, the source of the main power transistor Q1 is connected to the reference ground, that is, the source voltage of the main power transistor Q1 is equal to the reference voltage. The voltage difference between the drain and the source of the main power transistor Q1 is equal to the drain voltage of the main power transistor Q1. For example, the drain voltage of the main power transistor Q1 at the moment t6 is less than or equal to the preset voltage value. Correspondingly, the control circuit 111 controls the main power transistor Q1 to be turned on, and controls the auxiliary power transistor Q2 and the switching transistor Q3 to remain to be turned off.

In an embodiment, the control circuit 111 may detect the voltage VHB 2 of the bridge arm midpoint. As shown in FIG. 14 and FIG. 15, the source of the main power transistor Q1 is connected to the reference ground, that is, the source voltage of the main power transistor Q1 is equal to the reference voltage. The voltage difference between the drain and the source of the main power transistor Q1 is equal to the voltage VHB 2 of the bridge arm midpoint. For example, the drain voltage of the main power transistor Q1 at the moment t6 is less than or equal to the preset voltage value. Correspondingly, the control circuit 111 controls the main power transistor Q1 to be turned on, and controls the auxiliary power transistor Q2 and the switching transistor Q3 to remain to be turned off.

After the moment t6, the main power transistor Q1 is turned on, and the auxiliary power transistor Q2 and the switching transistor Q3 are in a turned-off state. The asymmetric half-bridge flyback converter circuit 112 operates in a next period of the discontinuous conduction mode.

According to embodiments of this application, the power supply module and the control circuit of the power supply module may control the rectifier circuit to discharge to the transformer, to reduce the voltage difference between the source and the drain of the main power transistor in the asymmetric half-bridge flyback converter circuit, so as to reduce a switching loss of the main power transistor, and further improve power conversion efficiency of the power supply module and an electronic device in which the power supply module is located.

The direct-current converter circuit 112 in the power supply module 11 provided in this embodiment of this application may be an active clamp flyback converter circuit.

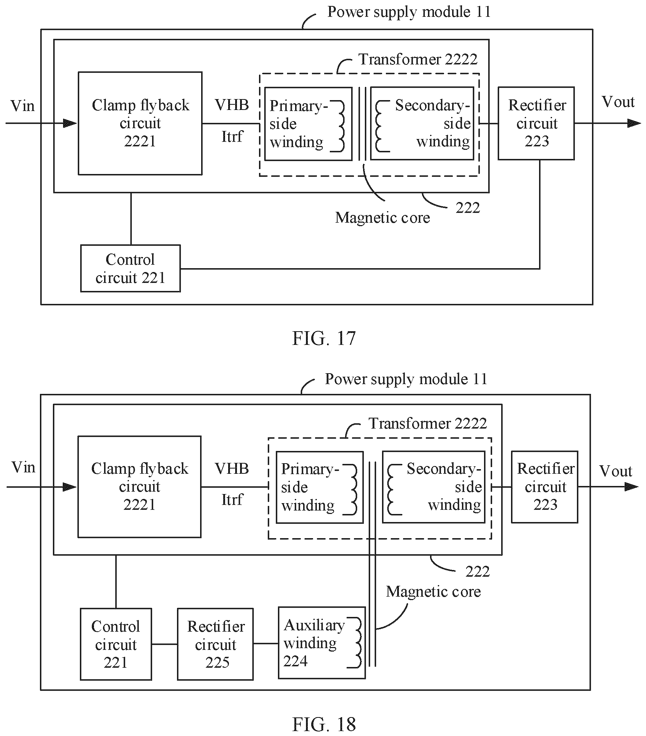

FIG. 17 is a diagram of the power supply module according to an embodiment of this application. As shown in FIG. 17, the power supply module 11 includes a control circuit 221, an active clamp flyback converter circuit 222, and a rectifier circuit 223. The control circuit 221 is separately connected to the active clamp flyback converter circuit 222 and the rectifier circuit 223, and is configured to control running of the active clamp flyback converter circuit 222 and the rectifier circuit 223. An input of the active clamp flyback converter circuit 222 is connected to the input power supply to receive the input voltage Vin, an output of the active clamp flyback converter circuit 222 is connected to an input of the rectifier circuit 223, and the input of the rectifier circuit 223 provides the output voltage Vout to supply power to the load 20.

The active clamp flyback converter circuit 222 includes a clamp flyback circuit 2221 and a transformer 2222. In this embodiment of this application, the clamp flyback circuit 2221 includes a main power transistor and an auxiliary power transistor. The control circuit 221 is configured to control the main power transistor and the auxiliary power transistor in the clamp flyback circuit 2221. The transformer 2222 includes a primary-side winding and a secondary-side winding. The primary-side winding and the secondary-side winding of the transformer 2222 are coupled through a magnetic core. An input of the clamp flyback circuit 2221 receives the input voltage Vin, and an output of the clamp flyback circuit 2221 is connected to the primary-side winding of the transformer 2222. The secondary-side winding of the transformer 2222 provides the output voltage Vout through the rectifier circuit 223 to supply power to the load 20.

FIG. 18 is another diagram of the power supply module according to an embodiment of this application. As shown in FIG. 18, the power supply module 11 includes the control circuit 221, the active clamp flyback converter circuit 222, the rectifier circuit 223, an auxiliary winding 224, and a rectifier circuit 225. It may be understood that a part in FIG. 18 that is the same as that in FIG. 17 is not described again.

The control circuit 221 is separately connected to the active clamp flyback converter circuit 222 and the rectifier circuit 225, and is configured to control running of the active clamp flyback converter circuit 222 and the rectifier circuit 225. The auxiliary winding 224 is coupled to the primary-side winding of the transformer 2222 through a magnetic core of the transformer 2222. The auxiliary winding 224 is configured to supply power to the control circuit 221 through the rectifier circuit 225. Specifically, an input of the rectifier circuit 225 is connected to the auxiliary winding 224, and an output of the rectifier circuit 225 is configured to supply power to the control circuit 221.

When the power supply module 11 shown in FIG. 17 and FIG. 18 runs, the control circuit 221 controls the active clamp flyback converter circuit 222 to operate in a discontinuous conduction mode. Specifically, the clamp flyback circuit 2221 receives the input voltage Vin, and the control circuit 111 controls the main power transistor and the auxiliary power transistor in the clamp flyback circuit 2221 to be alternately turned on and off, so as to excite the primary-side winding of the transformer 2222. As shown in FIG. 17, the primary-side winding of the transformer 2222 may transmit energy to the secondary-side winding of the transformer 2222. As shown in FIG. 18, the primary-side winding of the transformer 2222 may transmit energy to the secondary-side winding of the transformer 2222 and the auxiliary winding 224.

Within a period of the discontinuous conduction mode, after the auxiliary power transistor of the active clamp flyback converter circuit 222 is turned off and before the main power transistor is turned on, the control circuit 221 controls the rectifier circuit 223 in FIG. 17 or the rectifier circuit 225 in FIG. 18 to discharge to the transformer 2222 for preset duration.

In an embodiment, after the auxiliary power transistor in the clamp flyback circuit 2221 is turned off and before the main power transistor is turned on, the control circuit 221 may control the rectifier circuit 223 to discharge to the transformer 2222 within the preset duration through the secondary-side winding of the transformer 2222. As shown in FIG. 17, after the auxiliary power transistor is turned off and before the main power transistor is turned on, the control circuit 111 controls the rectifier circuit 223 to discharge to the transformer 2222 through the secondary-side winding of the transformer 2222, and after the preset duration, the control circuit 111 controls the rectifier circuit 223 to stop discharging. Specifically, the primary-side winding and the secondary-side winding of the transformer 2222 are coupled through a magnetic core. A discharge current generated by the rectifier circuit 223 during discharging flows through the secondary-side winding of the transformer 2222, and the primary-side winding of the transformer 2222 generates a coupling voltage. The primary-side winding of the transformer 2222 and a parasitic capacitor of the main power transistor in the clamp flyback circuit 2221 form an LC oscillation circuit.

After the rectifier circuit 223 discharges for the preset duration, the control circuit 221 controls the rectifier circuit 223 to stop discharging. The rectifier circuit 223 stops outputting the discharge current to the secondary-side winding of the transformer 2222, and no coupling voltage is generated at two terminals of the primary-side winding of the transformer 2222. Correspondingly, a voltage difference between a drain and a source of the main power transistor in the clamp flyback circuit 2221 decreases.

In an embodiment, after the auxiliary power transistor in the clamp flyback circuit 2221 is turned off and before the main power transistor is turned on, the control circuit 221 may control the rectifier circuit 225 to discharge to the transformer 2222 for the preset duration through the auxiliary winding. As shown in FIG. 18, after the auxiliary power transistor is turned off and before the main power transistor is turned on, the control circuit 221 controls the rectifier circuit 225 to start discharging to the transformer 2222 through the auxiliary winding 224, and after the preset duration, the control circuit 221 controls the rectifier circuit 225 to stop discharging. Specifically, the primary-side winding of the transformer 2222 and the auxiliary winding 224 are coupled through a magnetic core.

A discharge current generated by the rectifier circuit 225 during discharging flows through the auxiliary winding 224, and the primary-side winding of the transformer 2222 generates a coupling voltage. After the rectifier circuit 225 discharges for the preset duration, the control circuit 221 controls the rectifier circuit 225 to stop discharging. The rectifier circuit 225 stops outputting the discharge current to the auxiliary winding 224, and no coupling voltage is generated at two terminals of the primary-side winding of the transformer 2222. Correspondingly, a voltage difference between a drain and a source of the main power transistor in the clamp flyback circuit 2221 decreases.

In this embodiment of this application, the preset duration of discharging of the rectifier circuit 223 in FIG. 17 or the rectifier circuit 225 in FIG. 18 may be determined based on a current direction of the primary-side winding of the transformer 2222.

In an implementation, the control circuit 221 may control, based on a comparison result of the voltage difference between the drain and the source of the main power transistor in the clamp flyback circuit 2221 and a sum of the input voltage Vin and the primary-side winding coupling voltage, the control circuit 221 controls the rectifier circuit 223 in FIG. 17 or the rectifier circuit 225 in FIG. 18 to start discharging to the transformer. For example, when a difference between the voltage difference between the drain and the source of the main power transistor in the clamp flyback circuit 2221 and the sum of the input voltage Vin and the primary-side winding coupling voltage is less than or equal to a preset value, the control circuit 221 controls the rectifier circuit 223 in FIG. 17 or the rectifier circuit 225 in FIG. 18 to start discharging to the transformer.

After the rectifier circuit 223 in FIG. 17 or the rectifier circuit 225 in FIG. 18 stops discharging to the transformer 2222, the control circuit 221 controls the main power transistor to be turned on based on the comparison result of the voltage difference between the drain and the source of the main power transistor in the clamp flyback circuit 2221 and the preset voltage value. For example, when the voltage difference between the drain and the source of the main power transistor is less than or equal to the preset voltage value, the control circuit 221 controls the main power transistor to be turned on. After the main power transistor is turned on, the active clamp flyback converter circuit 222 operates in a next period of the discontinuous conduction mode.

In this embodiment of this application, the preset voltage value may be any value greater than 0 and less than the input voltage Vin. For example, the input voltage Vin is usually 90 V to 264 V, and the preset voltage value may be set to 0 V, 5 V, 6 V, 10 V, 20 V, or the like. A smaller preset voltage value indicates a smaller switching loss when the main power transistor is turned on. When the preset voltage value is 0 V, the switching loss of the main power transistor is the smallest. In view of process costs of a power switching transistor, the preset voltage value may be set to a value greater than zero, for example, 5 V, 6 V, 10 V, or 20 V, so that not only the switching loss of the main power transistor can be reduced, but also costs of the power supply module can be reduced.

The power supply module and the control circuit of the power supply module provided in embodiments of this application control the rectifier circuit to discharge to the transformer for the preset duration, and after the preset duration, the control circuit controls the rectifier circuit to stop discharging, so that the voltage difference between the drain and the source of the main power transistor in the active clamp flyback converter circuit can be reduced, and the main power transistor can be turned on when the voltage difference between the drain and the source of the main power transistor is small. This reduces the switching loss of the main power transistor, and further improves power conversion efficiency of the power supply module and an electronic device in which the power supply module is located.

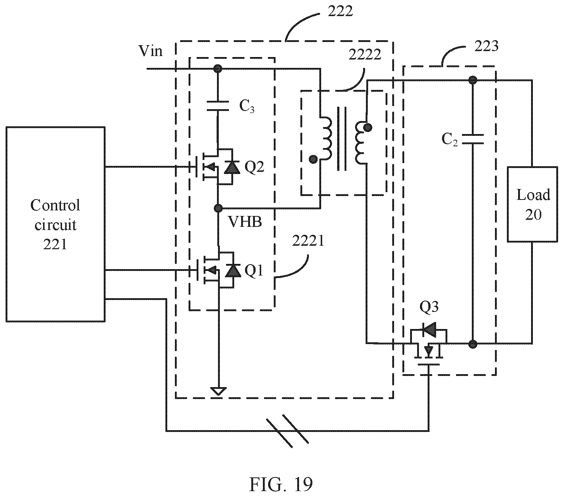

FIG. 19 is another schematic of a circuit of the power supply module according to an embodiment of this application. As shown in FIG. 19, the power supply module includes the control circuit 221, the active clamp flyback converter circuit 222, and the rectifier circuit 223. The active clamp flyback converter circuit 222 includes the clamp flyback circuit 2221 and the transformer 2222. The clamp flyback circuit 2221 includes the main power transistor Q1, the auxiliary power transistor Q2, and a clamp capacitor C₃. The transformer 2222 includes the primary-side winding and the secondary-side winding. The rectifier circuit 223 includes the switching transistor Q3 and the capacitor C₂. The primary-side winding and the secondary-side winding of the transformer 2222 are coupled through a magnetic core.

The main power transistor Q1, the auxiliary power transistor Q2, and the clamp capacitor C₃ in the clamp flyback circuit 2221 are connected in series. For example, one terminal of the clamp capacitor C₃ is connected to the input power supply to receive the input voltage Vin, the other terminal of the clamp capacitor C₃ is connected to the drain of the auxiliary power transistor Q2, the source of the auxiliary power transistor Q2 is connected to the drain of the main power transistor Q1, and the source of the main power transistor Q1 is connected to the reference ground.

Anon-dotted terminal of the primary-side winding of the transformer 2222 is connected to the input power supply to receive the input voltage Vin, and a dotted terminal of the primary-side winding is connected to the drain of the main power transistor Q1 and the source of the auxiliary power transistor Q2. The secondary-side winding of the transformer 2222 supplies power to the load 20 through the rectifier circuit 223. For example, a non-dotted terminal of the secondary-side winding of the transformer 2222 is connected to the drain of the switching transistor Q3, the source of the switching transistor Q3 is connected to one terminal of the capacitor C₂, and the other terminal of the capacitor C₂ is connected to a dotted terminal of the secondary-side winding of the transformer 2222.

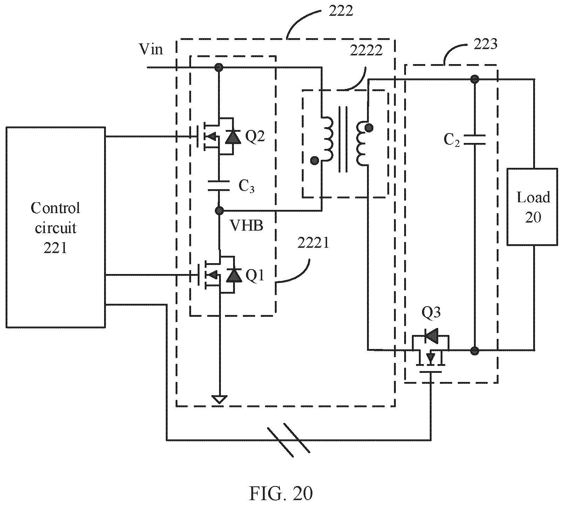

FIG. 20 is another schematic of a circuit of the power supply module according to an embodiment of this application. It may be understood that a part in FIG. 20 that is the same as that in FIG. 19 is not described again. As shown in FIG. 20, the main power transistor Q1, the auxiliary power transistor Q2, and the clamp capacitor C₃ in the clamp flyback circuit 2221 are connected in series. The drain of the auxiliary power transistor Q2 is configured to connect to the input power supply to receive the input voltage Vin, the source of the auxiliary power transistor Q2 is connected to one terminal of the clamp capacitor C₃, the other terminal of the clamp capacitor C₃ is connected to the drain of the main power transistor Q1, and the source of the main power transistor Q1 is connected to the reference ground. The non-dotted terminal of the primary-side winding of the transformer 2222 is connected to the input power supply, and the dotted terminal of the primary-side winding is connected to the drain of the main power transistor Q1 and the source of the auxiliary power transistor Q2.

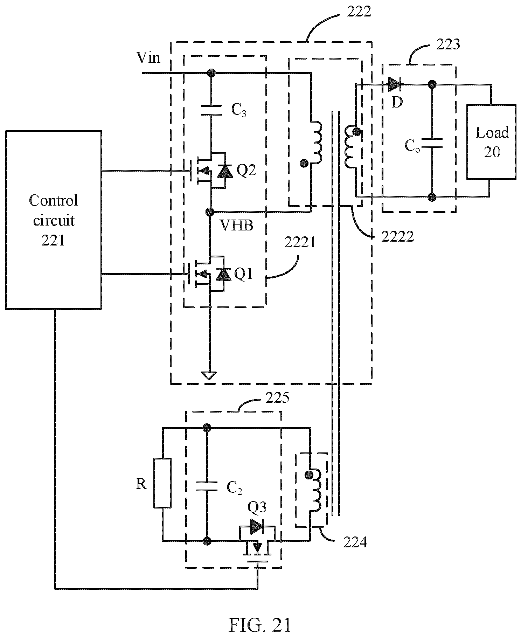

FIG. 21 is another schematic of a circuit of the power supply module according to an embodiment of this application. As shown in FIG. 21, the power supply module 11 includes the control circuit 221, the active clamp flyback converter circuit 222, the rectifier circuit 223, the auxiliary winding 224, and the rectifier circuit 225. It may be understood that a part in FIG. 21 that is the same as that in FIG. 19 is not described again.

The rectifier circuit 223 includes a diode D and an output capacitor C₀. The secondary-side winding of the transformer 2222 supplies power to the load 20 through the rectifier circuit 223. The dotted terminal of the secondary-side winding of the transformer 2222 is connected to an anode of the diode D, one terminal of the output capacitor C₀ is connected to a cathode of the diode D, and one terminal of the output capacitor C₀ is connected to the non-dotted terminal of the secondary-side winding of the transformer 2222.

The auxiliary winding 224 is coupled to the primary-side winding of the transformer 2222 through a magnetic core of the transformer 2222. The rectifier circuit 225 includes the switching transistor Q3 and the capacitor C₂. The auxiliary winding 224 supplies power to the control circuit 221 through the rectifier circuit 225, which is illustrated by using a resistor R as an example. For example, a non-dotted terminal of the auxiliary winding 224 is connected to the drain of the switching transistor Q3, the source of the switching transistor Q3 is connected to one terminal of the capacitor C₂, and a dotted terminal of the auxiliary winding 224 is connected to the other terminal of the capacitor C₂.

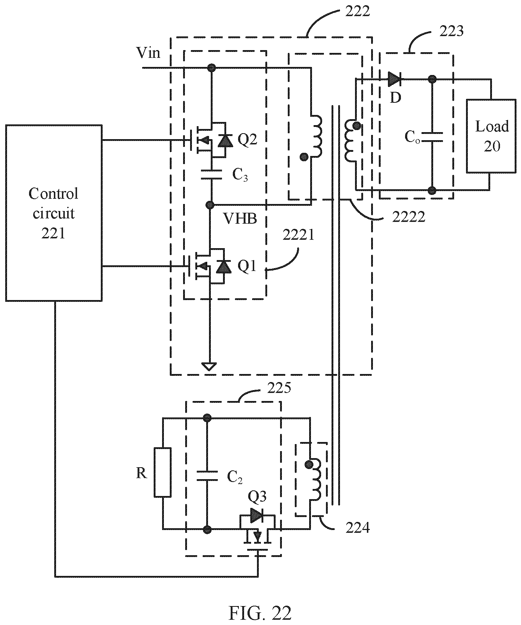

FIG. 22 is another schematic of a circuit of the power supply module according to an embodiment of this application. As shown in FIG. 22, the power supply module 11 includes the control circuit 221, the active clamp flyback converter circuit 222, the rectifier circuit 223, the auxiliary winding 224, and the rectifier circuit 225. It may be understood that a part in FIG. 22 that is the same as that in FIG. 21 is not described again. The clamp flyback circuit 2221 in FIG. 22 is the same as the clamp flyback circuit 2221 in FIG. 20. Details are not described again.

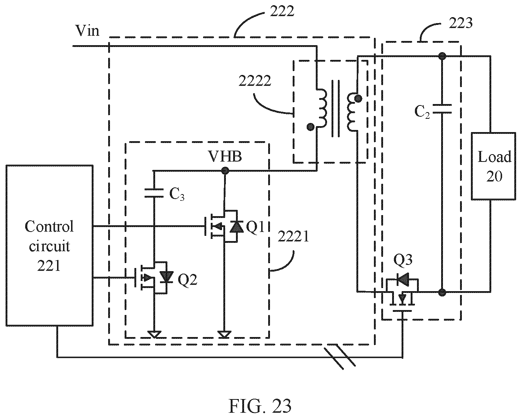

FIG. 23 is another schematic of a circuit of the power supply module according to an embodiment of this application. As shown in FIG. 23, the power supply module 11 includes the control circuit 221, the active clamp flyback converter circuit 222, and the rectifier circuit 223. It may be understood that a part in FIG. 23 that is the same as that in FIG. 19 or FIG. 20 is not described again. The non-dotted terminal of the primary-side winding of the transformer 2222 in the clamp flyback circuit 2221 in FIG. 23 receives the input voltage Vin, the dotted terminal of the primary-side winding of the transformer 2222 is connected to the drain of the main power transistor Q1, and the source of the main power transistor Q1 is connected to the reference ground. The dotted terminal of the primary-side winding of the transformer 2222 is further connected to one terminal of the clamp capacitor C₃, the other terminal of the clamp capacitor C₃ is connected to the source of the auxiliary power transistor Q2, and the drain of the auxiliary power transistor Q2 is connected to the reference ground.

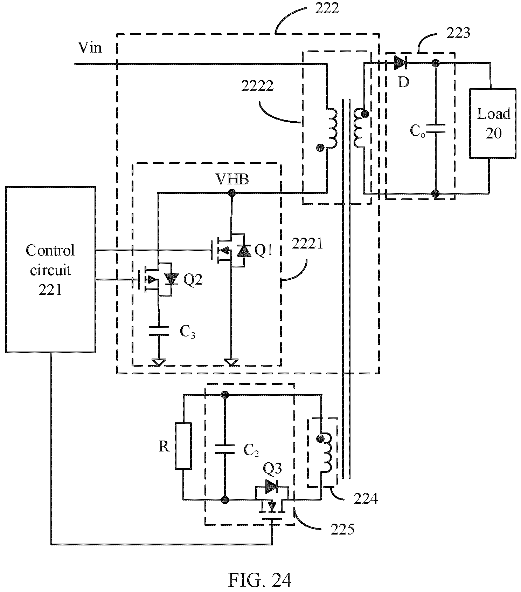

FIG. 24 is another schematic of a circuit of the power supply module according to an embodiment of this application. As shown in FIG. 24, the power supply module 11 includes the control circuit 221, the active clamp flyback converter circuit 222, the rectifier circuit 223, the auxiliary winding 224, and the rectifier circuit 225. It may be understood that a part in FIG. 24 that is the same as that in FIG. 21 or FIG. 22 is not described again. The non-dotted terminal of the primary-side winding of the transformer 2222 in the clamp flyback circuit 2221 in FIG. 24 receives the input voltage Vin, the dotted terminal of the primary-side winding of the transformer 2222 is connected to the drain of the main power transistor Q1, and the source of the main power transistor Q1 is connected to the reference ground. The dotted terminal of the primary-side winding of the transformer 2222 is further connected to the source of the auxiliary power transistor Q2, the drain of the auxiliary power transistor Q2 is connected to one terminal of the clamp capacitor C₃, and the other terminal of the clamp capacitor C₃ is connected to the reference ground.

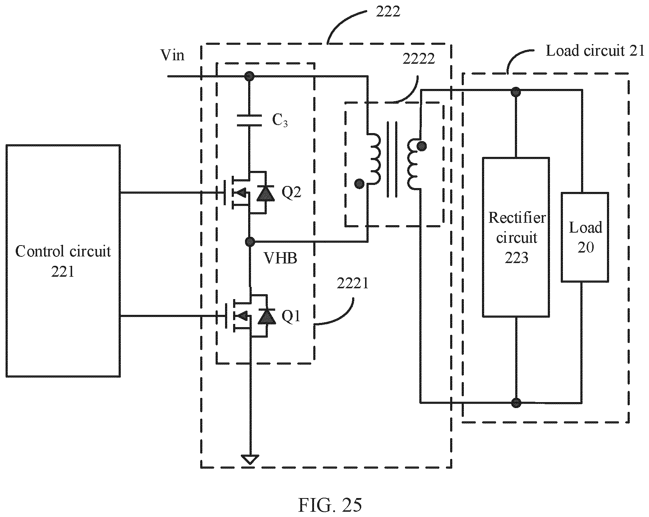

FIG. 25 is another diagram of the power supply module according to an embodiment of this application. A part in FIG. 25 that is the same as that in FIG. 19 to FIG. 24 is not described again. As shown in FIG. 25, the power supply module 11 includes the load circuit 21. The load circuit 21 includes the rectifier circuit 223 and the load 20. The rectifier circuit 223 supplies power to the load 20. The secondary-side winding of the transformer 2222 in the power supply module 11 supplies power to the load circuit 21. In an implementation, the load circuit 21 may alternatively be the power supply module 11 or an external device of the electronic device 1.

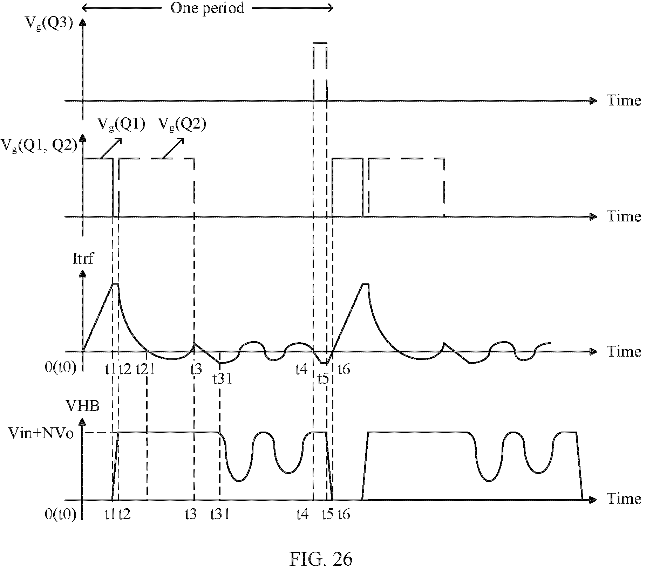

FIG. 26 is a diagram of a running process of the power supply module according to an embodiment of this application. As shown in FIG. 26, a solid line in V_{g}(Q1, Q2) represents a control signal V_{g}(Q1) sent by the control circuit 221 to the main power transistor Q1, and a dashed line in V_{g}(Q1, Q2) represents a control signal V_{g}(Q2) sent by the control circuit 221 to the auxiliary power transistor Q2. V_{g}(Q3) represents a control signal V_{g}(Q3) sent by the control circuit 221 to the switching transistor Q3. Itrf represents a primary-side winding current of the transformer 2222. The primary-side winding current Itrf of the transformer 2222 may flow from the source of the main power transistor Q1 to the primary-side winding of the transformer 2222, that is, in a clockwise direction. The primary-side winding current Itrf of the transformer 2222 may alternatively flow from the primary-side winding of the transformer 2222 to the source of the main power transistor Q1, that is, in an anticlockwise direction. VHB represents a voltage of a series coupling point of the main power transistor Q1 and the auxiliary power transistor Q2. In this embodiment of this application, the series coupling point of the main power transistor Q1 and the auxiliary power transistor Q2 may also be referred to as a bridge arm midpoint.

With reference to FIG. 26, the following describes a running process of the power supply module 11 shown in FIG. 19 to FIG. 25 and a control function of the control circuit 221 thereof. As shown in FIG. 26, duration from a moment t0 to a moment t6 is a period of a discontinuous conduction mode, and a next period of the discontinuous conduction mode starts from the moment t6.

Before the moment t0, the power supply module 11 is in a standby state or an un-started state. The main power transistor Q1, the auxiliary power transistor Q2, and the switching transistor Q3 in the power supply module 11 are all in a turned-off state.

From the moment t0, the power supply module 11 starts to run, and the active clamp flyback converter circuit 222 operates in the discontinuous conduction mode. Specifically, the control circuit 221 controls the main power transistor Q1 and the auxiliary power transistor Q2 in the active clamp flyback converter circuit 222 to operate in the discontinuous conduction mode.

At the moment t0, the control circuit 221 controls the main power transistor Q1 to be turned on, and the control circuit 221 controls the auxiliary power transistor Q2 and the switching transistor Q3 to be turned off. The primary-side winding current Itrf of the transformer 2222 increases in the clockwise direction, and the voltage VHB of the bridge arm midpoint is equal to the reference voltage. In this embodiment of this application, a voltage of the reference ground is 0.

At a moment t1 after the moment t0, the control circuit 221 controls the auxiliary power transistor Q2 and the switching transistor Q3 to remain to be turned off, and the control circuit 221 controls the main power transistor Q1 to be turned off. That is, the control circuit 221 controls the auxiliary power transistor Q2 and the switching transistor Q3 to be turned off, and controls the main power transistor Q1 to be turned on for a period of time and then turned off. After the main power transistor Q1 is turned off, the primary-side winding current Itrf cannot change abruptly, the primary-side winding current Itrf decreases slowly in the clockwise direction, and the voltage of the voltage VHB of the bridge arm midpoint increases.

In this embodiment of this application, after the main power transistor Q1 is turned on, the input voltage Vin is used to perform excitation the primary-side winding, and a coupling voltage nVo is correspondingly generated at two terminals of the secondary-side winding or the auxiliary winding. After the main power transistor Q1 is turned off, the input voltage Vin and the coupling voltage nVo are both applied to the parasitic capacitor inside the main power transistor Q1. Therefore, the voltage VHB increases to a sum of the input voltage Vin and the coupling voltage NVo of the primary-side winding, that is, the voltage VHB increases to Vin+NVo. N represents a ratio of a number of turns in the primary-side winding to a number of turns in the secondary-side winding, or a ratio of a number of turns in the primary-side winding to a number of turns in the auxiliary winding; and Vo represents a voltage at two terminals of the secondary-side winding or a voltage at two terminals of the auxiliary winding.

At a moment t2 after the moment t1, the control circuit 221 controls the main power transistor Q1 and the switching transistor Q3 to remain to be turned off, and the control circuit 221 controls the auxiliary power transistor Q2 to be turned on. After the auxiliary power transistor Q2 is turned on, the main power transistor Q1 and the switching transistor Q3 are in a turned-off state, and the primary-side winding of the transformer 2222, the clamp capacitor C₃, and the auxiliary power transistor Q2 form a loop. The voltage VHB of the bridge arm midpoint is equal to Vin+NVo.

After the moment t2 and before a moment t3, the auxiliary power transistor Q2 is in a turned-on state. The clamp capacitor C₃ and the primary-side winding form an LC oscillation circuit. The voltage VHB of the bridge arm midpoint is still Vin+NVo.

At the moment t3, the control circuit 221 controls the main power transistor Q1 and the switching transistor Q3 to remain to be turned off, and the control circuit 221 controls the auxiliary power transistor Q2 to be turned off. That is, after the control circuit 221 controls the auxiliary power transistor Q2 to be turned on for a period of time, the control circuit 221 controls the auxiliary power transistor Q2 to be turned off. After the auxiliary power transistor Q2 is turned off, the voltage of the voltage VHB of the bridge arm midpoint is still Vin+NVo.

At a moment t31 after the moment t3, the main power transistor Q1 and the auxiliary power transistor Q2 are in a turned-off state, and the primary-side winding of the transformer 2222 and the parasitic capacitor of the main power transistor Q1 form an LC oscillation circuit. The voltage VHB of the bridge arm midpoint and the primary-side winding current Itrf oscillate.

At a moment t4, the control circuit 221 controls the switching transistor Q3 to be turned on for preset duration, and the capacitor C₂ discharges to the transformer 2222 within the preset duration. Specifically, the auxiliary power transistor Q2 is turned off, and the main power transistor Q1 is not turned on at the moment t4. That is, after the auxiliary power transistor Q2 is turned off and before the main power transistor Q1 is turned on, the control circuit 111 controls the switching transistor Q3 to be turned on, and the capacitor C₂ discharges to the transformer 1122.

As shown in FIG. 19, FIG. 20, FIG. 23 and FIG. 25, the control circuit 221 controls the switching transistor Q3 in the rectifier circuit 223 to be turned on, and the capacitor C₂ in the rectifier circuit 223 discharges to the transformer 2222 through the secondary-side winding of the transformer 2222 at the moment t4. The switching transistor Q3 is in the turned-on state, the main power transistor Q1 and the auxiliary power transistor Q2 are in the turned-off state, and the secondary-side winding of the transformer 2222, the capacitor C₂, and the switching transistor Q3 form a loop. The capacitor C₂ may discharge to generate a voltage at two terminals of the secondary-side winding of the transformer 2222, and correspondingly, a coupling voltage is generated at two terminals of the primary-side winding of the transformer 2222.

As shown in FIG. 21, FIG. 22 and FIG. 24, the control circuit 221 controls the switching transistor Q3 in the rectifier circuit 225 to be turned on, and the capacitor C₂ in the rectifier circuit 225 discharges to the transformer 2222 through the auxiliary winding 224 at the moment t4. The switching transistor Q3 is in the turned-on state, the main power transistor Q1 and the auxiliary power transistor Q2 are in the turned-off state, and the auxiliary winding 224, the capacitor C₂, and the switching transistor Q3 form a loop. The capacitor C₂ may discharge to generate a voltage at two terminals of the auxiliary winding 224, and correspondingly, a coupling voltage is generated at two terminals of the primary-side winding of the transformer 2222.

In this embodiment of this application, a ratio of the voltage at the two terminals of the secondary-side winding of the transformer 2222 to a voltage at the two terminals of the primary-side winding of the transformer 2222 is equal to a ratio of a number of turns in the secondary-side winding of the transformer 2222 to a number of turns in the primary-side winding of the transformer 2222. In this embodiment of this application, a ratio of the voltage at the two terminals of the auxiliary winding 224 to a voltage at the two terminals of the primary-side winding of the transformer 2222 is equal to a ratio of a number of turns in the auxiliary winding 224 to a number of turns in the primary-side winding of the transformer 2222.

In an embodiment, when a difference between a voltage difference between the drain and the source of the main power transistor Q1 and Vin+NVo is less than or equal to a preset voltage value, the control circuit 221 controls Q3 to be turned on, so that the capacitor C₂ discharges to the transformer 2222. It may be understood that the source of the main power transistor Q1 is connected to the reference ground, and the drain voltage of the main power transistor Q1 is equal to the voltage VHB of the bridge arm midpoint. For example, when the voltage VHB of the bridge arm midpoint oscillates to a highest point at the moment t4, the voltage difference between the drain and the source of the main power transistor Q1 is closest to Vin+ NVo, and the difference between the voltage difference between the drain and the source of the main power transistor Q1 and Vin+NVo is less than or equal to the preset voltage value.

At a moment t5 after the moment t4, the control circuit 221 controls the switching transistor Q3 to be turned off, and the capacitor C₂ stops discharging to the transformer 2222. That is, after controlling the switching transistor Q3 to be turned on for the preset duration, the control circuit 221 controls the switching transistor Q3 to be turned off. The preset duration may be determined based on a current direction of the primary-side winding current Itrf of the transformer 2222. After the switching transistor Q3 is turned off, the capacitor C₂ stops discharging. Correspondingly, no coupling voltage is generated at two terminals of the primary-side winding of the transformer 2222. The primary-side winding current Itrf is in the anticlockwise direction and cannot change abruptly. The parasitic capacitor of the main power transistor Q1 discharges, and the voltage of the voltage VHB of the bridge arm midpoint begins to decrease.

In an embodiment, the control circuit 221 controls the rectifier circuit 223 to stop discharging to the transformer 2222 through the secondary-side winding of the transformer 2222. As shown in FIG. 19, FIG. 20, FIG. 23, and FIG. 25, after the control circuit 221 controls the switching transistor Q3 to be turned on for the preset duration, the control circuit 221 controls the switching transistor Q3 to be turned off, and the capacitor C₂ stops discharging. Correspondingly, the rectifier circuit 223 stops discharging to the transformer 2222.

In an embodiment, the control circuit 221 controls the rectifier circuit 225 to stop discharging to the transformer 2222 through the auxiliary winding 224. As shown in FIG. 21, FIG. 22, and FIG. 24, after the control circuit 221 controls the switching transistor Q3 to be turned on for the preset duration, the control circuit 221 controls the switching transistor Q3 to be turned off, and the capacitor C₂ stops discharging. Correspondingly, the rectifier circuit 225 stops discharging to the transformer 2222.

At the moment t6 after the moment t5, the control circuit 221 controls, based on the comparison result of the voltage difference between the drain and the source of the main power transistor Q1 and the preset voltage value, the main power transistor Q1 to be turned on. That is, after the control circuit 221 controls the switching transistor Q3 to be turned off, the control circuit 221 controls, based on the comparison result of the voltage difference between the drain and the source of the main power transistor Q1 and the preset voltage value, the main power transistor Q1 to be turned on. In this embodiment of this application, the control circuit 221 may detect the voltage difference between the drain and the source of the main power transistor Q1 in one or more manners.

In an embodiment, the control circuit 221 may detect the voltage difference between two terminals, namely, the drain and the source of the main power transistor Q1. For example, the voltage difference between the drain and the source of the main power transistor Q1 at the moment t6 is less than or equal to the preset voltage value. Correspondingly, the control circuit 221 controls the main power transistor Q1 to be turned on, and controls the auxiliary power transistor Q2 and the switching transistor Q3 to remain to be turned off.

In an embodiment, the control circuit 221 may detect the drain voltage of the main power transistor Q1. As shown in FIG. 19 to FIG. 22, the source of the main power transistor Q1 is connected to the reference ground, that is, the source voltage of the main power transistor Q1 is equal to the reference voltage. Correspondingly, the voltage difference between the drain and the source of the main power transistor Q1 is equal to the drain voltage of the main power transistor Q1. For example, the drain voltage of the main power transistor Q1 at the moment t6 is less than or equal to the preset voltage value. Correspondingly, the control circuit 221 controls the main power transistor Q1 to be turned on, and controls the auxiliary power transistor Q2 and the switching transistor Q3 to remain to be turned off.

In an embodiment, the control circuit 221 may detect the voltage VHB of the bridge arm midpoint. As shown in FIG. 19 to FIG. 22, the source of the main power transistor Q1 is connected to the reference ground, and the drain voltage of the main power transistor Q1 is equal to the voltage VHB of the bridge arm midpoint. Correspondingly, the voltage difference between two terminals, namely, the drain and the source of the main power transistor Q1 is equal to the voltage VHB of the bridge arm midpoint. For example, the voltage VHB of the bridge arm midpoint at the moment t6 is less than or equal to the preset voltage value. Correspondingly, the control circuit 221 controls the main power transistor Q1 to be turned on, and controls the auxiliary power transistor Q2 and the switching transistor Q3 to remain to be turned off.

After the moment t6, the main power transistor Q1 is turned on, and the auxiliary power transistor Q2 and the switching transistor Q3 are in a turned-off state. The asymmetric half-bridge flyback converter circuit 112 operates in a next period of the discontinuous conduction mode.

According to embodiments of this application, the power supply module and the control circuit of the power supply module may control the rectifier circuit to discharge to the transformer, to reduce the voltage difference between the source and the drain of the main power transistor in the active clamp flyback converter circuit, so as to reduce a switching loss of the main power transistor, and further improve power conversion efficiency of the power supply module and an electronic device in which the power supply module is located.

All functional units in embodiments of this application may be integrated into one processing unit, each unit may be separately used as one unit, or two or more units may be integrated into one unit. The integrated unit may be implemented in a form of hardware, or may be implemented in a form of a hardware and software functional unit.

If the integrated unit in this application is implemented in a form of a software functional module and sold or used as an independent product, the integrated unit may also be stored in a computer-readable storage medium. Based on such an understanding, the technical solutions of embodiments of this application essentially, or the part contributing to the conventional technology may be implemented in a form of a software product. The computer software product is stored in a storage medium, and includes several instructions for instructing a computer device (which may be a personal computer, a server, a network device, or the like) to perform all or a part of the methods described in embodiments of this application. The foregoing storage medium includes various media that can store program code, such as a removable storage device, a ROM, a RAM, a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control circuit of a power supply module, wherein the power supply module is configured to: receive an input voltage and supply power to a load, the power supply module comprises an active clamp flyback converter circuit, an auxiliary winding, and a rectifier circuit, the active clamp flyback converter circuit comprises a main power transistor, an auxiliary power transistor, and a transformer, the auxiliary winding is coupled to the transformer, the active clamp flyback converter circuit operates in a discontinuous conduction mode, and the auxiliary winding supplies power to the control circuit through the rectifier circuit; and the control circuit is configured to:
after the auxiliary power transistor is turned off and before the main power transistor is turned on, control the rectifier circuit to discharge to the transformer for preset duration; and
after the rectifier circuit stops discharging to the transformer, control the main power transistor to be turned on based on a comparison result of a voltage difference between a drain and a source of the main power transistor and a preset voltage value.

2. The control circuit according to claim 1, wherein the control circuit is configured to: control, based on a comparison result of the voltage difference between the drain and the source of the main power transistor and a sum of the input voltage and a primary-side winding coupling voltage, the rectifier circuit to start discharging to the transformer for the preset duration.

3. The control circuit according to claim 1 or 2, wherein the rectifier circuit comprises a switching transistor and a capacitor, a drain of the switching transistor is connected to one terminal of the auxiliary winding, a source of the switching transistor is connected to one terminal of the capacitor, and the other terminal of the capacitor is connected to the other terminal of the auxiliary winding.

4. The control circuit according to claim 3, wherein the control circuit controls the switching transistor to be turned on, and the capacitor discharges to the transformer through the auxiliary winding; and the control circuit controls the switching transistor to be turned off, and the capacitor stops discharging to the transformer.

5. A control circuit of a power supply module, wherein the power supply module is configured to: receive an input voltage and supply power to a load, and comprises an active clamp flyback converter circuit and a rectifier circuit, the active clamp flyback converter circuit comprises a main power transistor, an auxiliary power transistor, and a transformer, the transformer comprises a primary-side winding and a secondary-side winding, the active clamp flyback converter circuit operates in a discontinuous conduction mode, and the secondary-side winding supplies power to the load through the rectifier circuit; and the control circuit is configured to:
after the auxiliary power transistor is turned off and before the main power transistor is turned on, control the rectifier circuit to discharge to the transformer through the secondary-side winding for preset duration; and
after the rectifier circuit stops discharging to the transformer, control the main power transistor to be turned on based on a comparison result of a voltage difference between a drain and a source of the main power transistor and a preset voltage value.

6. The control circuit according to claim 5, wherein the control circuit is configured to:
control, based on a comparison result of the voltage difference between the drain and the source of the main power transistor and a sum of the input voltage and a primary-side winding coupling voltage, the rectifier circuit to start discharging to the transformer for the preset duration.

7. The control circuit according to claim 5 or 6, wherein the rectifier circuit comprises a switching transistor and a capacitor, a drain of the switching transistor is connected to one terminal of the secondary-side winding, a source of the switching transistor is connected to one terminal of the capacitor, and the other terminal of the capacitor is connected to the other terminal of the secondary-side winding.

8. The control circuit according to claim 7, wherein the control circuit controls the switching transistor to be turned on, and the capacitor discharges to the transformer through the secondary-side winding; and the control circuit controls the switching transistor to be turned off, and the capacitor stops discharging to the transformer.

9. A power supply module, comprising:
an active clamp flyback converter circuit, configured to receive an input voltage, wherein the active clamp flyback converter circuit comprises a main power transistor, an auxiliary power transistor, and a transformer, and the active clamp flyback converter circuit operates in a discontinuous conduction mode;
a rectifier circuit, configured to receive power supplied by the transformer; and
a control circuit, configured to:
after the auxiliary power transistor is turned off and before the main power transistor is turned on, control the rectifier circuit to discharge to the transformer for preset duration; and
after the rectifier circuit stops discharging to the transformer, control the main power transistor to be turned on based on a comparison result of a voltage difference between a drain and a source of the main power transistor and a preset voltage value.

10. The power supply module according to claim 9, wherein the control circuit is configured to:
control, based on a comparison result of the voltage difference between the drain and the source of the main power transistor and a sum of the input voltage and a primary-side winding coupling voltage, the rectifier circuit to start discharging to the transformer for the preset duration.

11. The power supply module according to claim 9 or 10, wherein the rectifier circuit comprises a switching transistor and a capacitor.

12. The power supply module according to any one of claims 9 to 11, wherein the power supply module comprises an auxiliary winding, the auxiliary winding is coupled to the transformer, the auxiliary winding supplies power to the control circuit through the rectifier circuit, a drain of the switching transistor is connected to one terminal of the auxiliary winding, a source of the switching transistor is connected to one terminal of the capacitor, and the other terminal of the auxiliary winding is connected to the other terminal of the capacitor; and
when the control circuit controls the switching transistor to be turned on, the rectifier circuit discharges to the transformer through the auxiliary winding.

13. The power supply module according to any one of claims 9 to 11, wherein the transformer comprises a primary-side winding and a secondary-side winding, the secondary-side winding supplies power to a load through the rectifier circuit, a drain of the switching transistor is connected to one terminal of the secondary-side winding, a source of the switching transistor is connected to one terminal of the capacitor, and the other terminal of the secondary-side winding is connected to the other terminal of the capacitor; and
when the control circuit controls the switching transistor to be turned on, the rectifier circuit discharges to the transformer through the secondary-side winding.

14. The power supply module according to any one of claims 9 to 13, wherein within a period of the discontinuous conduction mode, the control circuit is configured to:
control the main power transistor to be turned on and the auxiliary power transistor to be turned off, and control the main power transistor to be turned off after the main power transistor is turned on for a period of time; and
after the main power transistor is turned off for a period of time, control the auxiliary power transistor to be turned on and the main power transistor to be turned off, and after the auxiliary power transistor is turned on for a period of time, control the auxiliary power transistor to be turned off.

15. An electronic device, comprising the control circuit according to any one of claims 1 to 8 or the power supply module according to any one of claims 9 to 14.
